# EUROPEAN PATENT SPECIFICATION

(11) **EP 4 518 483 B1**
(45) Date of publication and mention of the grant of the patent: **28.10.2026**
(21) Application number: 22939406.9
(22) Date of filing: 29.04.2022
(51) Int. Cl.: H04L 5/00, H04W 72/04

(54) **CONTROL CHANNEL RECEIVING METHOD AND APPARATUS, CONTROL CHANNEL SENDING METHOD AND APPARATUS, AND COMMUNICATION APPARATUS AND STORAGE MEDIUM**
STEUERKANALEMPFANGSVERFAHREN UND -VORRICHTUNG, STEUERKANALSENDEVERFAHREN UND -VORRICHTUNG SOWIE KOMMUNIKATIONSVORRICHTUNG UND SPEICHERMEDIUM
PROCÉDÉ ET APPAREIL DE RÉCEPTION DE CANAL DE COMMANDE, PROCÉDÉ ET APPAREIL D'ENVOI DE CANAL DE COMMANDE, ET APPAREIL DE COMMUNICATION ET SUPPORT D'ENREGISTREMENT

(43) Date of publication of application: 05.03.2025
(73) Proprietor: Beijing Xiaomi Mobile Software Co., Ltd., Beijing 100085 (CN)
(72) Inventor: ZHU, Yajun, Beijing 100085 (CN)
(74) Representative: Hersina, Günter
(86) International application number: PCT/CN2022/090770
(87) International publication number: WO 2023/206562

(56) References cited:
- WO-A1-2021/118192
- WO-A1-2021/139576
- CN-A- 112 311 514
- US-A1- 2022 131 642
- NOKIA ET AL: "Extension of the Dynamic Spectrum Sharing (DSS) WID", vol. TSG RAN, no. e-Meeting; 20200914 - 20200918, 7 September 2020 (2020-09-07), XP052340600, Retrieved from the Internet <URL:https://ftp.3gpp.org/tsg_ran/TSG_RAN/TSGR_89e/Docs/RP-201761.zip RP-201761 NR PDCCH multiplexing in DSS cell.docx> [retrieved on 20200907]
- ERICSSON: "On DSS enhancements in Rel-18", vol. TSG RAN, no. eMeeting; 20211206 - 20211217, 29 November 2021 (2021-11-29), XP052097084, Retrieved from the Internet <URL:https://ftp.3gpp.org/tsg_ran/TSG_RAN/TSGR_94e/Docs/RP-212946.zip RP-212946 Rel-18 DSS.docx> [retrieved on 20211129]
- NOKIA ET AL: "Extension of the Dynamic Spectrum Sharing (DSS) WID", vol. RAN WG1, no. e-Meeting; 20200817 - 20200828, 7 August 2020 (2020-08-07), XP051918041, Retrieved from the Internet <URL:https://ftp.3gpp.org/tsg_ran/WG1_RL1/TSGR1_102-e/Docs/R1-2006470.zip R1-2006470 NR PDCCH multiplexing in DSS cell_clean.docx> [retrieved on 20200807]
- ERICSSON: "On DSS enhancements in Rel-18", 3GPP DRAFT; RP-212946, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. eMeeting; 20211206 - 20211217, 29 November 2021 (2021-11-29), Mobile Competence Centre ; 650, route des Lucioles ; F-06921 Sophia-Antipolis Cedex ; France, XP052097084

## Description

### TECHNICAL FIELD

The present disclosure relates to the field of communication technologies, and provides control channel receiving method and apparatus, control channel transmitting method and apparatus, a communication device and a computer-readable storage medium.

### BACKGROUND

Currently, in a DSS (Dynamic Spectrum Sharing) scenario, a LTE (Long Term Evolution) system and an NR (New Radio) system can coexist on the same spectrum resources, which causes interference on the NR system by some pieces of information transmitted by the LTE system.

For example, when an RE (Resource Element) corresponding to a CRS (Cell-specific Reference Signal) transmitted by the LTE system conflicts with an RE corresponding to an NR PDCCH (Physical Downlink Control Channel), the corresponding NR PDCCH is punctured, and a terminal cannot receive the NR PDCCH on the conflicting RE, resulting in a reduction in the demodulation performance of NR PDCCH.

Moreover, in some scenarios, for example, when the terminal is at the edge of a cell, the terminal may receive CRSs corresponding to multiple cells, resulting in a stronger interference to the NR PDCCH. Relevant background art is disclosed in 3GPP contributions RP-201761, RP-212946, R1-2006470.

### SUMMARY

In view of the above, embodiments of the present disclosure provide control channel receiving method and apparatus, control channel transmitting method and apparatus, a communication device and a computer-readable storage medium, to solve the technical problem in the related technologies.

According to a first aspect, a control channel receiving method is provided by an embodiment of the present disclosure, which is applicable to or performed by a terminal. The method includes: determining a first time-domain symbol corresponding to a cell-specific reference signal (CRS), where the first time-domain symbol is part or all of time-domain symbols in time-domain resources where the CRS is located; and determining, at least based on configuration information of the CRS, whether it is expected to detect a new radio physical downlink control channel (NR PDCCH) on the first time-domain symbol.

According to a second aspect, a control channel transmitting method is provided by an embodiment of the present disclosure, which is applicable to or performed by a network device. The method includes: determining a first time-domain symbol corresponding to a cell-specific reference signal (CRS) configured for a terminal, where the first time-domain symbol is part or all of time-domain symbols in time-domain resources where the CRS is located; and determining, at least based on configuration information of the CRS, whether to expect the terminal to detect a new radio physical downlink control channel (NR PDCCH) to the terminal on the first time-domain symbol.

According to a third aspect, a control channel receiving apparatus is provided according to an embodiment of the present disclosure, which is applicable to or performed by a terminal. The apparatus includes: a processing module, configured to determine a first time-domain symbol corresponding to a cell-specific reference signal (CRS), where the first time-domain symbol is part or all of time-domain symbols in time-domain resources where the CRS is located; and determine, at least based on configuration information of the CRS, whether it is expected to detect a new radio physical downlink control channel (NR PDCCH) on the first time-domain symbol.

According to a fourth aspect, a control channel transmitting apparatus is provided according to an embodiment of the present disclosure, which is applicable to or performed by a network device. The apparatus includes: a processing module, configured to determine a first time-domain symbol corresponding to a cell-specific reference signal (CRS) configured for a terminal, where the first time-domain symbol is part or all of time-domain symbols in time-domain resources where the CRS is located; and determine, at least based on configuration information of the CRS, whether to expect the terminal to detect a new radio physical downlink control channel (NR PDCCH) to the terminal on the first time-domain symbol.

According to a fifth aspect, a communication device is provided according to an embodiment of the present disclosure, including: a processor; and a memory configured to store a computer program. The computer program is executed by the processor to implement the above control channel receiving method.

According to a sixth aspect, a communication device is provided according to an embodiment of the present disclosure, including: a processor; and a memory configured to store a computer program. The computer program is executed by the processor to implement the above control channel transmitting method.

According to a seventh aspect, a computer-readable storage medium is provided according to an embodiment of the present disclosure, which is configured to store a computer program. When the computer program is executed by a processor, steps in the above control channel receiving method are implemented.

According to an eighth aspect, a computer-readable storage medium is provided according to an embodiment of the present disclosure, which is configured to store a computer program. When the computer program is executed by a processor, steps in the above control channel transmitting method are implemented.

According to the embodiments of the present disclosure, the terminal can determine the first time-domain symbol corresponding to the resources occupied by the CRS, and can further determine whether it is expected to receive the NR PDCCH on the first time-domain symbol based on the configuration information of the CRS. When it is determined based on the configuration information of the CRS that the number of REs occupied by the CRS on the first time-domain symbol is relatively large, the terminal does not expect to receive the NR PDCCH on the first time-domain symbol, and the network device may not transmit the NR PDCCH to the terminal on the first time-domain symbol, thereby avoiding unnecessary consumption caused by the terminal receiving the NR PDCCH on the time-domain symbol with relatively few REs corresponding to the NR PDCCH.

### BRIEF DESCRIPTION OF THE DRAWINGS

In order to clearly illustrate technical solutions of embodiments of the present disclosure, a brief description of drawings used in the embodiments is given below. Obviously, the drawings in the following description are only part of the embodiments of the present disclosure, and for those skilled in the art, other drawings can be obtained according to these drawings without creative effort.
FIG. 1 is a schematic flow chart of a control channel receiving method according to an embodiment of the present disclosure.
FIG. 2 is a schematic diagram of resources occupied by a CRS according to an embodiment of the present disclosure.
FIG. 3 is another schematic diagram of resources occupied by a CRS according to an embodiment of the present disclosure.
FIG. 4 is a schematic flow chart of another control channel receiving method according to an embodiment of the present disclosure.
FIG. 5 is a schematic diagram of NR PDCCH receiving according to an embodiment of the present disclosure.
FIG. 6 is a schematic flow chart of another control channel receiving method according to an embodiment of the present disclosure.
FIG. 7 is a schematic flow chart of another control channel receiving method according to an embodiment of the present disclosure.
FIG. 8 is a schematic diagram illustrating a method of determining whether it is expected to receive an NR PDCCH on a first time-domain symbol according to a number of REs occupied by a CRS on the first time-domain symbol according to an embodiment of the present disclosure.
FIG. 9 is a schematic flow chart of another control channel receiving method according to an embodiment of the present disclosure.
FIG. 10 is a schematic flow chart of another control channel receiving method according to an embodiment of the present disclosure.
FIG. 11 is a schematic flow chart of a control channel transmitting method according to an embodiment of the present disclosure.
FIG. 12 is a schematic flow chart of another control channel transmitting method according to an embodiment of the present disclosure.
FIG. 13 is a schematic flow chart of another control channel transmitting method according to an embodiment of the present disclosure.
FIG. 14 is a schematic flow chart of another control channel transmitting method according to an embodiment of the present disclosure.
FIG. 15 is a schematic flow chart of another control channel transmitting method according to an embodiment of the present disclosure.
FIG. 16 is a schematic flow chart of another control channel transmitting method according to an embodiment of the present disclosure.
FIG. 17 is a schematic block diagram of a control channel receiving apparatus according to an embodiment of the present disclosure.
FIG. 18 is a schematic flow chart of a control channel transmitting apparatus according to an embodiment of the present disclosure.
FIG. 19 is a schematic block diagram of a control channel transmitting apparatus according to an embodiment of the present disclosure.
FIG. 20 is a schematic block diagram of a control channel receiving apparatus according to an embodiment of the present disclosure.

### DETAILED DESCRIPTION

The technical solutions of the embodiments of the present disclosure will be clearly and completely described hereinafter in conjunction with the accompanying drawings of the embodiments of the present disclosure. Apparently, the described embodiments merely relate to a part of, rather than all of, the embodiments of the present disclosure, and based on these embodiments of the present disclosure, a person of ordinary skill in the art may obtain other embodiments without creative effort, all of which shall fall within the scope of the present disclosure.

The terminology used in the embodiments of the present disclosure is for the purpose of only describing particular embodiments and is not intended to limit the embodiments of the present disclosure. The singular forms "a" and "the" as used in the embodiments and the appended claims of the present disclosure are intended to include the plural form as well, unless the context clearly dictates otherwise. It is also appreciated that the term "and/or" as used herein refers to and includes any and all possible combinations of one or more of the associated listed items.

It should be appreciated that although such terms as first, second and third may be used in the embodiments of the present disclosure to describe various information, the information should not be limited to these terms. These terms are only used to distinguish information of the same type from each other. For example, without departing from the scope of the embodiments of the present disclosure, first information may also be referred to as second information, and similarly, second information may also be referred to as first information. Depending on the context, for example, the word "if" as used herein may be interpreted as "when", or "in a case where", or "in response to determining".

For the purpose of simplicity and ease of understanding, the terms used in this specification when characterizing a size relationship are "greater than" or "less than", "higher than" or "lower than". However, a person of ordinary skill in the art can understood that the term "greater than" also covers the meaning of "greater than or equal to", and "less than" also covers the meaning of "less than or equal to"; the term "higher than" covers the meaning of "higher than or equal to", and the meaning of "lower than" also covers the meaning of "lower than or equal to".

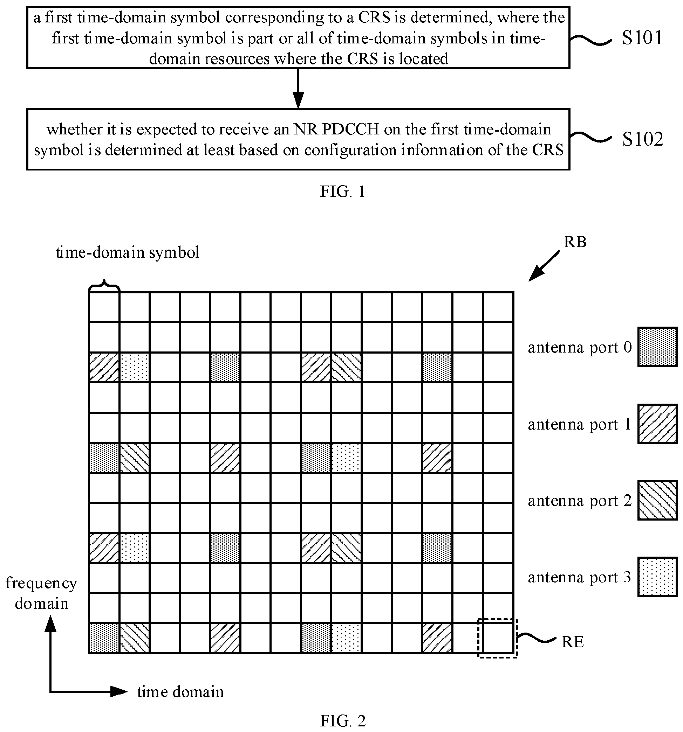

FIG. 1 is a schematic flow chart of a control channel receiving method according to an embodiment of the present disclosure. The control channel receiving method shown in the embodiment can be applicable to or performed by a terminal. The terminal includes, but not limited to: a mobile phone, a tablet computer, a wearable device, a sensor, a device in Internet of Things and other communication devices. The terminal can communicate with a network device. The network device includes but is not limited to a network device in 4G, 5G, 6G and other communication systems, such as a base station, a core network, etc.

As shown in FIG. 1, the control channel receiving method may include the following steps.

In step S101, a first time-domain symbol (orthogonal frequency division multiplexing (OFDM) symbol) corresponding to a cell-specific reference signal (CRS) is determined, where the first time-domain symbol is part or all of time-domain symbols in time-domain resources where the CRS is located.

In step S102, whether it is expected to receive a new radio physical downlink control channel (NR PDCCH) on the first time-domain symbol is determined at least based on configuration information of the CRS.

The receiving the NR PDCCH on the first time-domain symbol may refer to detecting a PDCCH candidate on the first time-domain symbol. For example, determining that it is not expected to receive the NR PDCCH on the first time-domain symbol may refer to not detecting any PDCCH candidate on the first time-domain symbol; determining that it is expected to receive the NR PDCCH on the first time-domain symbol may refer to detecting a PDCCH candidate on the first time-domain symbol.

FIG. 2 is a schematic diagram of resources occupied by a CRS according to an embodiment of the present disclosure.

In an embodiment, an example is given that an identifier of a LTE cell (Cell ID) is equal to 0 and an LTE CRS supports 4 ports, namely antenna port 0, antenna port 1, antenna port 2 and antenna port 3. The LTE CRS corresponding to various antenna ports occupies different resources respectively, and resources occupied by the LTE CRS corresponding to the four antenna ports are grouped together as the first resource.

As shown in FIG. 2, one RB (Resource Block) contains 14 symbols (such as orthogonal frequency division multiplexing (OFDM) symbols) in the time domain, and 12 REs (Resource Elements) in the frequency domain. For example, the REs on one symbol are numbered as RE#0 to RE#11 from bottom to top. As shown in FIG. 2, the CRS occupies the first, second, fifth, eighth, ninth and twelfth symbols, and occupies REs numbered as RE#0, RE#3, RE#6 and RE#9.

The resources occupied by the CRS may be determined according to a pattern of the CRS. The CRS pattern is used to indicate the resources occupied by the CRS. A PDSCH (Physical Downlink Shared CHannel) can perform rate matching based on the resources of the CRS, so it may also be referred to as CRS Rate Matching pattern (CRS RM pattern).

It should be noted that the LTE CRS may be transmitted by an LTE network device, and the NR PDCCH may be transmitted by the NR network device. An NR network device may also determine the resources occupied by the CRS, for example, may determine the resources by communicating with the LTE network device, or based on a protocol.

In addition, the terminal may determine the resources occupied by the CRS according to the CRS pattern (which may be determined according to instructions of the network device or according to a predefined rule), and may determine resources occupied by the NR PDCCH according to configuration of the NR network device.

In a DSS scenario, an LTE system and an NR system can coexist in the same spectrum, which will cause a CRS transmitted by the LTE system to interfere with an NR PDCCH. For example, a network device in the NR system may puncture the NR PDCCH according to the CRS pattern, and the terminal receives the NR PDCCH according to a punctured situation of the NR PDCCH.

In some scenarios, for example, when the terminal is at the junction of multiple LTE cells, the terminal may receive CRSs corresponding to multiple LTE cells, there are multiple CRS patterns, and resources occupied by multiple CRS patterns are different, which causes multiple CRS patterns to occupy REs more densely, resulting in conflicts with the NR PDCCH on more REs.

If the network device punctures the NR PDCCH based on multiple CRS patterns, a large amount of information carried by the NR PDCCH may be lost, affecting the decoding effect. Moreover, due to the large number of CRS patterns that needs to be considered, excessive REs corresponding to the NR PDCCH are punctured, and as a result, it is difficult for the terminal to correctly parse the PDCCH when receiving the NR PDCCH, affecting the PDCCH demodulation performance, and further affecting subsequent resource scheduling.

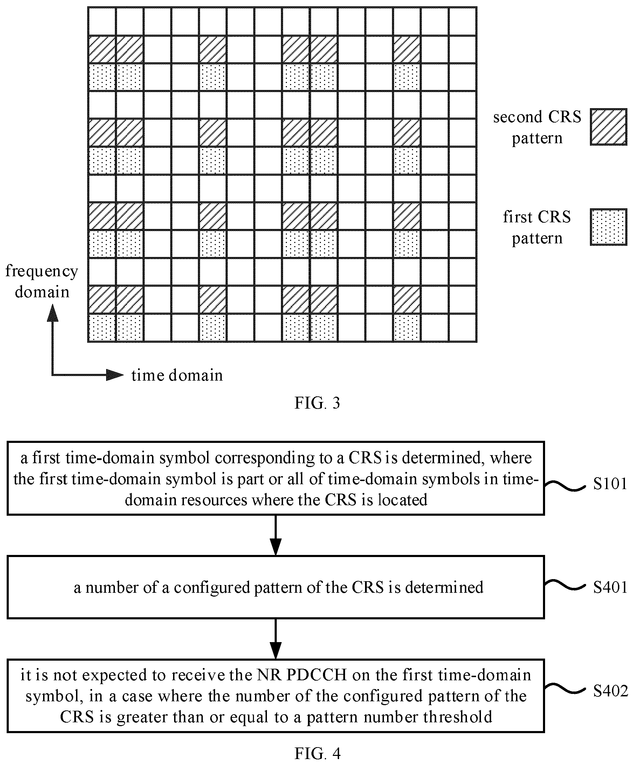

FIG. 3 is another schematic diagram of resources occupied by CRS according to an embodiment of the present disclosure.

As shown in FIG. 3, taking the terminal at the junction of two LTE cells as an example, the network device needs to puncture the NR PDCCH according to two CRS patterns. The first CRS pattern occupies the same positions as shown in FIG. 2, and the second CRS pattern occupies the first, second, fifth, eighth, ninth and twelfth symbols, and occupies REs numbered as RE#1, RE#4, RE#7 and RE#10.

For example, a control resource set (CORESET) corresponding to the terminal corresponds to the first, second, and third symbols in time-domain resources. Since the CRS on each symbol of first and second symbols occupies 8 REs within a range of one RB, the NR PDCCH corresponding to the 8 REs needs to be punctured, and the NR PDCCH only occupies 4 REs on each symbol of the first and second symbols. In this case, when receiving the NR PDCCH on the first and second symbols, the terminal needs to consider the case where the network device has punctured the NR PDCCH according to the two CRS patterns, resulting in a large overhead, and very little information in the NR PDCCH that can be received.

According to the embodiments of the present disclosure, the terminal can determine part or all of time-domain symbols corresponding to resources occupied by the CRS, which, for example, is referred to as the first time-domain symbol. The first time-domain symbol may be time-domain symbol(s) that partially or completely overlaps a CORESET (for example, a CORESET configured by the network device for the terminal). As such, whether it is expected to receive the NR PDCCH on the first time-domain symbol is comprehensively determined based on the configuration information of the CRS, such as the number of CRS patterns, and a situation of occupied resources by the CRS (a number of occupied REs, an occupancy rate, etc.).

For example, when determining that the number of REs occupied by the CRS on the first time-domain symbol is relatively large based on the configuration information of the CRS, the terminal may not expect to receive the NR PDCCH on the first time-domain symbol, and the network device may not transmit the NR PDCCH to the terminal on the first time-domain symbol, thereby avoiding unnecessary consumption caused by the terminal receiving the NR PDCCH on the time-domain symbol with relatively few REs corresponding to the NR PDCCH.

In an embodiment, the configuration information of the CRS includes at least one of the following:

the number of CRS patterns, the number of ports corresponding to the CRS patterns, time-frequency resources occupied by the CRS (such as REs, which may be used to determine the number of REs occupied by the CRS on the first time-domain symbol, and a first resource occupancy rate of the CRS on the first time-domain symbol). Considering that the numbers of REs occupied by the CRS in different RB ranges are the same, the number of occupied REs may be evaluated by the number of REs occupied by the CRS in one RB range.

In an embodiment, the method further includes: transmitting, to a network device, capability information used for indicating whether the terminal supports receiving the NR PDCCH on the first time-domain symbol in a case where the configuration information of the CRS meets a target configuration.

The terminal may report the capability information to the network device, to inform the network device whether the terminal supports receiving the NR PDCCH on the first time-domain symbol when the configuration information of the CRS meets the target configuration.

The target configuration includes but is not limited to: the number of CRS patterns is greater than or equal to a pattern number threshold, a number of resource elements (REs) occupied by the CRS in one RB corresponding to the first time-domain symbol is greater than or equal to an RE number threshold, a first resource occupancy rate of the CRS occupying resource elements in one RB corresponding to the first time-domain symbol is higher than or equal to a first occupancy rate threshold, a second resource occupancy rate of the CRS in the CORESET of the NR PDCCH is higher than or equal to a second occupancy rate threshold.

For example, in a case where the configuration information includes the number of CRS patterns, the target configuration may be that the number of CRS patterns is greater than or equal to 2, and the network device can determine, based on the capability information, whether the terminal supports receiving the NR PDCCH on the first time-domain symbol in a case where the number of CRS patterns is greater than or equal to 2. If the terminal does not support receiving the NR PDCCH on the first time-domain symbol, the network device may not transmit the NR PDCCH to the terminal on the first time-domain symbol in the scenario of the target configuration; if the terminal supports receiving the NR PDCCH on the first time-domain symbol, the network device may transmit the NR PDCCH to the terminal on the first time-domain symbol in the scenario of the target configuration.

In addition, in an embodiment, the network device may puncture the NR PDCCH according to the CRS pattern(s). If there are multiple CRS patterns, the network device may puncture the NR PDCCH according to one or more specific CRS patterns among the multiple CRS patterns.

In this case, the terminal can determine specific CRS pattern(s) according to network instructions, or determine the CRS pattern(s) according to a predefined rule. For example, multiple lists including the specific CRS pattern(s) may be indicated to the terminal. For example, a signaling used for indication may be lte-CRS-PatternList1-r18 and lte-CRS-PatternList2-r18. When the terminal determines that the specific pattern(s) is configured via lte-CRS-PatternList1-r18 and other CRS patterns are configured via lte-CRS-PatternList2-r18, the terminal may determine that the network device only punctures the NR PDCCH according to the specific CRS pattern(s) and does not puncture the NR PDCCH according to other CRS patterns, and the terminal can also receive the NR PDCCH according to this puncturing manner.

It should be noted that in the embodiments of the present disclosure, whether it is expected to receive the NR PDCCH on the first time-domain symbol is determined at least based on the configuration information of the CRS, that is, the basis for determining whether it is expected to receive the NR PDCCH on the first time-domain symbol. In addition to the configuration information of the CRS, other information may also be included, such as configuration information of the NR PDCCH, etc., which will be specifically described in the following embodiments.

FIG. 4 is a schematic flow chart of another control channel receiving method according to an embodiment of the present disclosure. As shown in FIG. 4, determining, at least based on the configuration information of the CRS, whether it is expected to receive the NR PDCCH on the first time-domain symbol includes the following steps.

In step S401, a number of a configured pattern of the CRS is determined.

In step S402, it is not expected to receive the NR PDCCH on the first time-domain symbol, in a case where the number of the configured pattern of the CRS is greater than or equal to a pattern number threshold.

In an embodiment, in a case where the number of CRS pattern(s) is relatively large, for example, in a case where the number of CRS pattern(s) is greater than or equal to the pattern number threshold, it may be determined that the CRS occupies a relatively large number of REs on the first time-domain symbol, the terminal may not expect to receive any NR PDCCH on the first time-domain symbol, and the network device may not transmit any NR PDCCH to the terminal on the first time-domain symbol, thereby avoiding unnecessary consumption caused by the terminal receiving the NR PDCCH on the time-domain symbol with relatively few REs corresponding to the NR PDCCH.

In a case where the number of CRS pattern(s) is relatively small, for example, in a case where the number of CRS pattern(s) is less than the pattern number threshold, it may be determined that the CRS occupies a relatively small number of REs on the first time-domain symbol, the terminal may expect to receive an NR PDCCH on the first time-domain symbol, and the network device may transmit an NR PDCCH to the terminal on the first time-domain symbol.

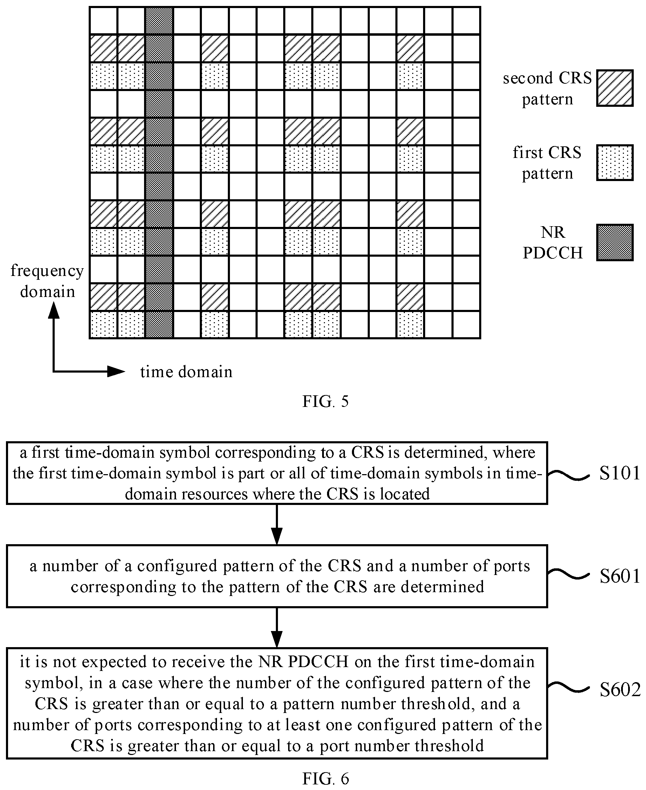

FIG. 5 is a schematic diagram of NR PDCCH receiving according to an embodiment of the present disclosure.

As shown in FIG. 5, the first CRS pattern and the second CRS pattern are of the same structures as shown in FIG. 3. For example, the time-domain resources of the CORESET correspond to the first to third time-domain symbols, and overlap the first and second time-domain symbols in the time-domain resources corresponding to CRS. In this case, the first and second time-domain symbols can be determined as the first time-domain symbols, and then it is determined whether it is expected to receive the NR PDCCH on the first time-domain symbols.

For example, if the configuration pattern number threshold is 2, in the case shown in FIG. 4, the number of CRS pattern(s) is 2, which is equal to the pattern number threshold, so the terminal does not expect to receive the NR PDCCH on the first time-domain symbols, and correspondingly, the network device does not transmit the NR PDCCH to the terminal on the first time-domain symbols. For example, the base station may transmit the NR PDCCH to the terminal on another symbol than the first time-domain symbols. Therefore, as shown in FIG. 4, the network device does not transmit the NR PDCCH to the terminal on the first one and second one of time-domain symbols, but only transmits the NR PDCCH to the terminal on the third one of time-domain symbols. The terminal does not expect to receive the NR PDCCH on the first one and second one of time-domain symbols, and expects to receive the NR PDCCH only on the third one of time-domain symbols, thereby avoiding unnecessary consumption caused by the terminal receiving the NR PDCCH on the time-domain symbol with relatively few REs corresponding to the NR PDCCH.

In a case where there is only one CRS pattern, the number of CRS pattern is 1, which is less than the pattern number threshold, the terminal may expect to receive the NR PDCCH on the first time-domain symbol, and the network device may transmit the NR PDCCH to the terminal on the first time-domain symbol.

It should be noted that the pattern number threshold may be determined based on signaling transmitted by the network device, or may be specified by a predefined rule, or may be configured by the network device for the terminal according to capability information after the capability information of the terminal (for example, an NR PDCCH parsing capability) is reported to the network device.

FIG. 6 is a schematic flow chart of another control channel receiving method according to an embodiment of the present disclosure. As shown in FIG. 6, determining, at least based on the configuration information of the CRS, whether it is expected to receive the NR PDCCH on the first time-domain symbol includes the following steps.

In step S601, a number of a configured pattern of the CRS and a number of ports corresponding to each configured pattern of the CRS are determined.

In step S602, it is not expected to receive the NR PDCCH on the first time-domain symbol, in a case where the number of the configured pattern of the CRS is greater than or equal to a pattern number threshold, and a number of ports corresponding to at least one configured pattern of the CRS is greater than or equal to a port number threshold.

In an embodiment, in a case where the number of the CRS pattern is relatively large, for example, in a case where the number of the CRS pattern is greater than or equal to the pattern number threshold, and the number of ports corresponding to the CRS pattern is relatively large, for example, the number of ports corresponding to at least one configured pattern of the CRS is greater than or equal to the port number threshold, it may be determined that the number of REs occupied by the CRS on the first time-domain symbol is relatively large, the terminal may not expect to receive the NR PDCCH on the first time-domain symbol, and the network device may not transmit the NR PDCCH to the terminal on the first time-domain symbol, thereby avoiding unnecessary consumption caused by the terminal receiving the NR PDCCH on the time-domain symbol with relatively few REs corresponding to the NR PDCCH.

It should be noted that whether it is expected to receive the NR PDCCH on the first time-domain symbol may also be determined only based on the number of ports corresponding to the CRS pattern. For example, if the number of ports corresponding to at least one of CRS pattern is greater than or equal to the port number threshold, it may be determined that it is not expected to receive the NR PDCCH on the first time-domain symbol.

In addition, the port number threshold may be determined based on a signaling transmitted by the network device, or may be designated by a predefined rule, or may be configured by the network device for the terminal according to capability information after the capability information of the terminal (for example, an NR PDCCH parsing capability) is reported to the network device.

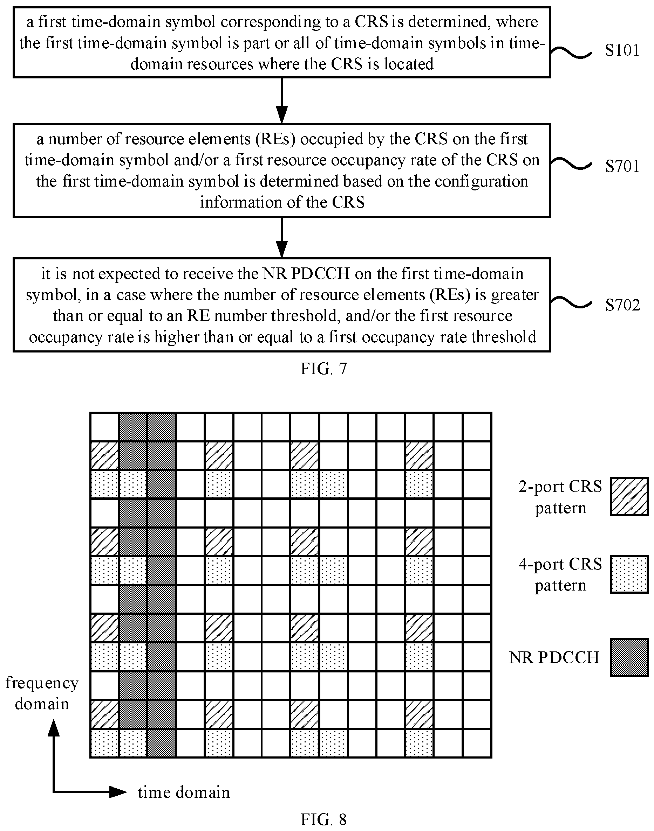

FIG. 7 is a schematic flow chart of another control channel receiving method according to an embodiment of the present disclosure. As shown in FIG. 7, determining, at least based on the configuration information of the CRS, whether it is expected to receive the NR PDCCH on the first time-domain symbol includes the following steps.

In step S701, a number of resource elements (REs) occupied by the CRS on the first time-domain symbol and/or a first resource occupancy rate of the CRS on the first time-domain symbol is determined based on the configuration information of the CRS.

In step S702, it is not expected to receive the NR PDCCH on the first time-domain symbol, in a case where the number of resource elements (REs) is greater than or equal to an RE number threshold, and/or the first resource occupancy rate is higher than or equal to a first occupancy rate threshold.

In an embodiment, in a case where the number of REs occupied by the CRS in one RB corresponding to the first time-domain symbol is relatively large, for example, greater than or equal to the RE number threshold, it may be determined that the number of REs occupied by the CRS on the first time-domain symbol is relatively large, the terminal may not expect to receive the NR PDCCH on the first time-domain symbol, and the network device may not transmit the NR PDCCH to the terminal on the first time-domain symbol, thereby avoiding unnecessary consumption caused by the terminal receiving the NR PDCCH on the time-domain symbol with relatively few REs corresponding to the NR PDCCH.

In an embodiment, in a case where the first resource occupancy rate of the CRS occupying one RB corresponding to the first time-domain symbol is relatively high, for example, higher than or equal to the first occupancy rate threshold, it may be determined that the number of REs occupied by the CRS on the first time-domain symbol is relatively large.

The first resource occupancy rate refers to a ratio of REs occupied by the CRS in one RB corresponding to the first time-domain symbol to all REs in one RB corresponding to the first time-domain symbol. For example, in the embodiment shown in FIG. 4, the first time-domain symbol contains the first one and second one of time-domain symbols, one time-domain symbol corresponds to 12 REs in a range of one RB, then the first one and second one of time-domain symbols correspond to a total of 24 REs, and the CRS occupies 16 REs on the first one and second one of time-domain symbols. The first resource occupancy rate may be calculated to be 16/24, which is approximately equal to 66.7%. For example, if the first occupancy rate threshold is 50%, it may be determined that the first resource occupancy rate is higher than the first occupancy rate threshold, so the terminal does not expect to receive the NR PDCCH on the first time-domain symbol.

In a case where the first resource occupancy rate is higher than or equal to the first occupancy rate threshold, the terminal may not expect to receive the NR PDCCH on the first time-domain symbol, and the network device may not transmit the NR PDCCH to the terminal on the first time-domain symbol, thereby avoiding unnecessary consumption caused by the terminal receiving the NR PDCCH on the time-domain symbols with relatively few REs corresponding to the NR PDCCH.

The number of REs occupied by the CRS on the first time-domain symbol may be for one RB. Similarly, the first resource occupancy rate of the CRS on the first time-domain symbol may also be for one RB.

It should be noted that the RE number threshold and the first occupancy rate threshold may be determined according to a signaling transmitted by the network device, or may be specified by a predefined rule, or may be configured by the network device for the terminal according to capability information after the capability information of the terminal (for example, an NR PDCCH parsing capability) is reported to the network device.

FIG. 8 is a schematic diagram illustrating a method of determining whether it is expected to receive an NR PDCCH on a first time-domain symbol according to a number of REs occupied by a CRS on the first time-domain symbol according to an embodiment of the present disclosure.

In an embodiment, two CRS patterns are still used as an example. However, it should be noted that the number of ports corresponding to the CRS pattern is not limited to four and can be set as needed.

For example, there are two CRS patterns in the embodiment. One CRS pattern is as shown in FIG. 2, corresponding to 4 ports, and the other CRS pattern corresponds to 2 ports, occupies the first, fifth, eighth ports and twelfth symbols in one RB, and occupies REs numbered as RE#1, RE#4, RE#7, and RE#10.

As shown in FIG. 8, an example is still given that the first one and the second one of time-domain symbols are the first time-domain symbols. If the RE number threshold is equal to 5, the number of REs occupied by the CRS on the first one of the time-domain symbol is 8, which is greater than the RE number threshold, the number of REs occupied by the CRS on the second time-domain symbol is 4, which is less than the RE number threshold. As a result, the terminal does not expect to receive the NR PDCCH on the first one of time-domain symbols, and the terminal can expect to receive the NR PDCCH on the second one of time-domain symbols.

Since there is a rule in the numbers of REs occupied by the CRS patterns when corresponding to different numbers of ports, a relationship table may be set up for different RE number thresholds, which includes an association relationship between cases where the CRS patterns correspond to different numbers of ports and a symbol where the terminal expects to receive the NR PDCCH on the first time-domain symbol. For example, if the RE number threshold is equal to 4, the relationship table may be as shown in Table 1 below.

**Table 1**

| CRS pattern | Available PDCCH symbols |
|---|---|
| Single CRS pattern | 0,1,2 |
| 4-port CRS + 4-port CRS | 2 |
| 4-port CRS +2-port CRS | 1,2 |
| 4-port CRS + 1-port CRS | 1,2 |
| 2-port CRS + 2-port CRS | 1,2 |
| 2-port CRS + 1-port CRS | 1,2 |
| 1-port CRS + 1-port CRS | 0,1,2 |

As shown in Table 1, for example, in the embodiment shown in FIG. 8, in the case of 4-port CRS + 2-port CRS, the terminal does not expect to receive the NR PDCCH on the first time-domain symbol (a corresponding symbol identifier is 0), expects to receive the NR PDCCH on the second time-domain symbol (a corresponding symbol identifier is 1), and also expects to receive the NR PDCCH on the third time-domain symbol (a corresponding symbol identifier is 2) because there is no CRS on the third time-domain symbol. As a result, reception is performed on the second time-domain symbol and the third time-domain symbol, that is, it is expected to receive the NR PDCCH on the time-domain symbols with symbol identifiers 1 and 2.

On this basis, if the RE number threshold is determined, the relationship table corresponding to the RE number threshold can be determined, and then the identifier of the symbol where it is expected to receive the NR PDCCH is determined in the relationship table based on ports corresponding to multiple CRS patterns, so that it is expected to receive the NR PDCCH on a time-domain symbol corresponding to the symbol identifier.

In an embodiment, the RE number threshold and/or the first occupancy rate threshold are related to an aggregation level (AL) of the NR PDCCH and/or a format of downlink control information (DCI) in the NR PDCCH.

The RE number threshold may be determined according to the AL of the NR PDCCH. For example, the higher the AL is, the larger the RE number threshold is. For example, a level threshold may be set, if the AL is higher than the level threshold, the RE number threshold is 6; if the AL is lower than or equal to the level threshold, the RE number threshold is 4.

It should be noted that the level threshold may be determined based on a signaling transmitted by the network device, or may be specified by a predefined rule, or may be configured by the network device for the terminal according to capability information after the capability information of the terminal (for example, an NR PDCCH parsing capability) is reported to the network device.

In addition to determining the RE number threshold based on the AL of the NR PDCCH, the RE number threshold may also be determined based on the format of the DCI in the NR PDCCH. For example, the more bits the DCI format occupies, the smaller the RE number threshold is. For example, DCI format 1_1 occupies a relatively large number of bits, and the corresponding acceptable number threshold is relatively small, for example, the number threshold is equal to 3; DCI format 1_2 occupies a relatively small number of bits, and the corresponding acceptable number threshold is relatively large, for example, the number threshold is equal to 5.

Similarly, the first occupancy rate threshold may be determined according to the AL of the NR PDCCH. For example, the higher the AL is, the lower the first occupancy rate threshold is. In addition to determining the first occupancy rate threshold based on the AL of the NR PDCCH, it may also be determined based on the format of the DCI in the NR PDCCH. For example, the more bits the DCI format occupies, the smaller the first occupancy rate threshold is.

In an embodiment, determining, at least based on the configuration information of the CRS, whether it is expected to receive the NR PDCCH on the first time-domain symbol includes: determining whether it is expected to receive the NR PDCCH on the first time-domain symbol based on the configuration information of the CRS and configuration information of the NR PDCCH.

On the basis of determining whether it is expected to receive the NR PDCCH on the first time-domain symbol based on the configuration information of the CRS, other information, such as the configuration information of the NR PDCCH, may be further considered, so that whether it is expected to receive the NR PDCCH on the first time-domain symbol is comprehensively determined based on the configuration information of the CRS and the configuration information of the NR PDCCH.

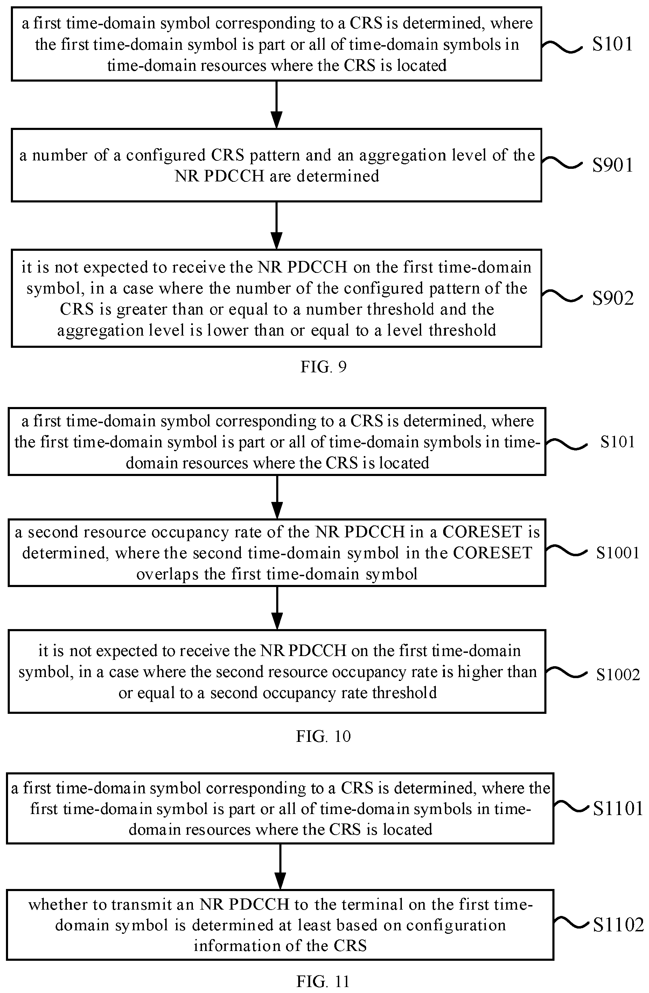

FIG. 9 is a schematic flow chart of another control channel receiving method according to an embodiment of the present disclosure. As shown in FIG. 9, determining whether it is expected to receive the NR PDCCH on the first time-domain symbol based on the configuration information of the CRS and the configuration information of the NR PDCCH includes:

In step S901, a number of a configured CRS pattern and an aggregation level of the NR PDCCH are determined.

In step S902, it is not expected to receive the NR PDCCH on the first time-domain symbol, in a case where the number of the configured pattern of the CRS is greater than or equal to a number threshold and the aggregation level is lower than or equal to a level threshold.

In an embodiment, in a case where the number of the pattern(s) of the CRS is greater than or equal to the number threshold, the aggregation level (AL) of the NR PDCCH may be further considered.

In the case where the number of the pattern(s) of the CRS is greater than or equal to the number threshold, it may be determined that the number of REs occupied by the CRS on the first time-domain symbol is relatively large. However, when the AL of the NR PDCCH is relatively high, for example, higher than the level threshold, the NR PDCCH occupies relatively many REs, and even if the NR PDCCH is punctured according to multiple CRS patterns, the NR PDCCH can still have much information remaining. Therefore, in this case, it can still be expected to receive the NR PDCCH on the first time-domain symbol.

However, when the AL of the NR PDCCH is relatively low, for example, lower than or equal to the level threshold, the NR PDCCH occupies relatively few REs, and the NR PDCCH has less remaining information after the NR PDCCH is punctured based on multiple CRS patterns. Therefore, in this case, it may not be expected to receive the NR PDCCH on the first time-domain symbol.

FIG. 10 is a schematic flow chart of another control channel receiving method according to an embodiment of the present disclosure. As shown in FIG. 10, determining, at least based on the configuration information of the CRS, whether it is expected to receive the NR PDCCH on the first time-domain symbol includes the following steps.

In step S1001, a second resource occupancy rate of the CRS in a control resource set (CORESET) (for example, a CORESET configured by the network device for the terminal) of the NR PDCCH is determined, where the second time-domain symbol in the CORESET overlaps the first time-domain symbol.

In step S1002, it is not expected to receive the NR PDCCH on the first time-domain symbol, in a case where the second resource occupancy rate is higher than or equal to a second occupancy rate threshold.

In an embodiment, the resource occupancy rate of the CRS in the CORESET of the NR PDCCH may be determined, for example, referred to as the second resource occupancy rate. If the second resource occupancy rate is relatively high, for example, higher than or equal to the second occupancy rate threshold, it may be determined that the number of the REs occupied by the CRS on the second time-domain symbol corresponding to the CORESET, that is, on the first time-domain symbol, is relatively large.

The second resource occupancy rate refers to a ratio of REs occupied by the CRS in the CORESET of the NR PDCCH to all the REs in the CORESET. For example, in the embodiment shown in FIG. 4, a range of one RB is for illustration, the CORESET occupies the first, second and third time-domain symbols of the RB, one time-domain symbol within one RB range corresponds to 12 RE, and then three time-domain symbols correspond to a total of 36 REs. The CRS occupies a total of 16 REs on the first and second time-domain symbols of the three time-domain symbols, and the second resource occupancy rate may be calculated as 16/36, which is approximately equal to 44.4%. For example, if the second occupancy rate threshold is 20%, it may be determined that the second resource occupancy rate is higher than the second occupancy rate threshold, so the terminal does not expect to receive the NR PDCCH on the first time-domain symbol.

In this case, if the NR PDCCH is transmitted on the first time-domain symbol, more REs corresponding to the NR PDCCH may be punctured, so the network device may not transmit the NR PDCCH on the first time-domain resource. In this case, time-domain symbols occupied by NR PDCCH transmission are a subset of consecutive time-domain symbols of the CORESER (for example, in FIG. 4, the NR PDCCH is transmitted only on the third time-domain symbol). The terminal may not expect to receive the NR PDCCH on the first time-domain symbol, thereby avoiding unnecessary consumption caused by the terminal receiving the NR PDCCH on the time-domain symbol with relatively few REs corresponding to the NR PDCCH.

Correspondingly, in a case where the second resource occupancy rate is relatively high, for example, higher than the second occupancy rate threshold, it may be determined that the number of REs occupied by the CRS on the second time-domain symbol of the CORESET, that is, on the first time-domain symbol, is relatively small. In this case, the network device may transmit the NR PDCCH on the first time-domain resource, and the terminal may expect to receive the NR PDCCH on the first time-domain symbol.

It should be noted that the second occupancy rate threshold may be determined based on a signaling transmitted by the network device, or may be specified by a predefined rule, or may be configured by the network device for the terminal according to capability information after the capability information of the terminal (for example, an NR PDCCH parsing capability) is reported to the network device.

In addition to determining whether it is expected to receive the NR PDCCH on the first time-domain symbol based on the resource occupancy rate of the CRS in the CORESET, whether it is expected to receive the NR PDCCH on the first time-domain symbol may also be determined based on a resource occupancy rate of the NR PDCCH in the CORESET.

In an embodiment, considering that some reference signals for the network device, such as SSB, are transmitted in a current slot, in order to avoid conflict between the NR PDCCH and an SSB signal, the NR PDCCH may be scheduled and transmitted on the time-domain symbol where the CRS is located, and a specific time-domain symbol occupied by NR PDCCH transmission may be determined based on the second resource occupancy rate. In a next slot, if the SSB is not transmitted in the corresponding slot, the corresponding PDCCH may be transmitted on a time-domain symbol not occupied by the CRS. The specific time-domain symbol occupied by the NR PDCCH transmission within a range of the CORESET may be determined dynamically, without reconfiguring the CORESET and a corresponding search space (searchspace) via the RRC signaling, thereby reducing PDCCH transmission delay and achieving more flexible resource scheduling.

In an embodiment, the terminal may not expect that the second resource occupancy corresponding to the configured CORESET is higher than the second resource occupancy rate threshold.

FIG. 11 is a schematic flow chart of a control channel transmitting method according to an embodiment of the present disclosure. The control channel transmitting method shown in the embodiment may be applicable to or performed by a network device. The network device may communicate with a terminal. The network device includes, but not limited to: base stations in communication systems such as 4G base stations, 5G base stations, and 6G base stations. The terminal includes, but not limited to: a mobile phone, a tablet computer, a wearable device, sensors, a device in Internet of Things and other communication devices.

As shown in FIG. 11, the control channel transmitting method may include the following steps.

In step S1101, a first time-domain symbol (orthogonal frequency division multiplexing (OFDM) symbol) corresponding to a cell-specific reference signal (CRS) configured for a terminal is determined, where the first time-domain symbol is part or all of time-domain symbols in time-domain resources where the CRS is located.

In step S1102, whether to transmit a new radio physical downlink control channel (NR PDCCH) to the terminal on the first time-domain symbol is determined at least based on configuration information of the CRS.

As shown in FIG. 2, one RB (Resource Block) contains 14 symbols (such as orthogonal frequency division multiplexing (OFDM) symbols) in the time domain, and 12 REs (Resource Elements) in the frequency domain. For example, the REs on one symbol are numbered as RE#0 to RE#11 from bottom to top. As shown in FIG. 2, CRS occupies the first, second, fifth, eighth, ninth and twelfth symbols, and occupies REs numbered as RE#0, RE#3, RE#6, and RE#9.

The resources occupied by the CRS may be determined according to a pattern of the CRS. The CRS pattern is used to indicate the resources occupied by the CRS. A PDSCH (Physical Downlink Shared CHannel) can perform rate matching based on the resource of the CRS, so it may also be referred to as CRS Rate Matching pattern (CRS RM pattern).

It should be noted that the LTE CRS may be transmitted by an LTE network device, and the NR PDCCH may be transmitted by the NR network device. An NR network device can also determine the resources occupied by the CRS, for example, may determine the resources by communicating with the LTE network device, or based on a protocol.

In addition, the terminal may determine the resources occupied by the CRS according to the CRS pattern (which may be determined according to instructions of the network device or according to a predefined rule), and may determine resources occupied by the NR PDCCH according to configuration of the NR network device.

In a DSS scenario, an LTE system and an NR system can coexist in the same spectrum, which will cause a CRS transmitted by the LTE system to interfere with an NR PDCCH. For example, a network device in the NR system may puncture the NR PDCCH according to the CRS pattern, and the terminal receives the NR PDCCH according to a punctured situation of the NR PDCCH.

In some scenarios, for example, when the terminal is at the junction of multiple LTE cells, the terminal may receive CRSs corresponding to multiple LTE cells, there are multiple CRS patterns, and resources occupied by multiple CRS patterns are different, which causes multiple CRS patterns to occupy REs more densely, resulting in a conflict with NR PDCCH on more REs.

If the network device punctures the NR PDCCH based on multiple CRS patterns, a large amount of information carried by the NR PDCCH may be lost, affecting the decoding effect. Moreover, due to the large number of CRS patterns that need to be considered, excessive REs corresponding to the NR PDCCH are punctured, and as a result, it is difficult for the terminal to correctly parse the PDCCH when receiving the NR PDCCH, affecting the PDCCH demodulation performance, and further affecting subsequent resource scheduling.

As shown in FIG. 3, taking the terminal at the junction of two LTE cells as an example, the network device needs to puncture the NR PDCCH according to two CRS patterns. The first CRS pattern occupies the same positions as shown in FIG. 2, and the second CRS pattern occupies the first, second, fifth, eighth, ninth and twelfth symbols, and occupies REs numbered as RE#1, RE#4, RE#7, RE#10.

For example, a control resource set (CORESET) corresponding to the terminal corresponds to the first, second, and third symbols in time-domain resources. Since the CRS on each symbol of first and second symbols occupies 8 REs within a range of one RB, the NR PDCCH corresponding to the 8 REs needs to be punctured, and the NR PDCCH only occupies 4 REs on each symbol of the first and second symbols. In this case, when receiving the NR PDCCH on the first and second symbols, the terminal needs to consider the case where the network device has punctured the NR PDCCH according to the two CRS patterns, resulting in a large overhead, and very little information in the NR PDCCH that can be received.

According to the embodiments of the present disclosure, the network device can determine part or all of time-domain symbols corresponding to resources occupied by the CRS, which, for example, is referred to as the first time-domain symbol. The first time-domain symbol may be time-domain symbol(s) that partially or completely overlaps a CORESET (for example, a CORESET configured by the network device for the terminal). As such, whether to transmit the NR PDCCH to the terminal on the first time-domain symbol is comprehensively determined based on the configuration information of the CRS, such as the number of CRS patterns, and a situation of occupied resources by the CRS (a number of occupied REs, an occupancy rate, etc.).

For example, when determining that the number of REs occupied by the CRS on the first time-domain symbol is relatively large based on the configuration information of the CRS, the terminal may not expect to receive the NR PDCCH on the first time-domain symbol, and the network device may not transmit the NR PDCCH to the terminal on the first time-domain symbol, thereby avoiding unnecessary consumption caused by that the network device transmits the NR PDCCH to the terminal on the time-domain symbol with relatively few REs corresponding to the NR PDCCH.

In an embodiment, the configuration information of the CRS includes at least one of the following:
the number of CRS patterns, the number of ports corresponding to the CRS patterns, time-frequency resources occupied by the CRS (such as REs, which may be used to determine the number of REs occupied by the CRS on the first time-domain symbol, a first resource occupancy rate of the CRS on the first time-domain symbol). Considering that the numbers of REs occupied by the CRS in different RB ranges are the same, the number of occupied REs may be evaluated by the number of REs occupied by the CRS in one RB range.

In an embodiment, the method further includes: receiving capability information transmitted by the terminal; and determining whether the terminal supports receiving the NR PDCCH on the first time-domain symbol, in a case where it is determined based on the capability information that the configuration information of the CRS meets a target configuration.

The terminal may report the capability information to the network device, to inform the network device whether the terminal supports receiving the NR PDCCH on the first time-domain symbol when the configuration information of the CRS meets the target configuration.

The target configuration includes but is not limited to: the number of CRS patterns is greater than or equal to a pattern number threshold, a number of resource elements (REs) occupied by the CRS in one RB corresponding to the first time-domain symbol is greater than or equal to an RE number threshold, a first resource occupancy rate of the CRS occupying resource elements in one RB corresponding to the first time-domain symbol is greater than or equal to a first occupancy rate threshold, a second resource occupancy rate of the CRS in the CORESET of the NR PDCCH is greater than or equal to a second occupancy rate threshold.

For example, in a case where the configuration information includes the number of CRS patterns, the target configuration may be that the number of CRS patterns is greater than or equal to 2, and the network device can determine, based on the capability information, whether the terminal supports receiving the NR PDCCH on the first time-domain symbol in a case where the number of CRS patterns is greater than or equal to 2. If the terminal does not support receiving the NR PDCCH on the first time-domain symbol, the network device may not transmit the NR PDCCH to the terminal on the first time-domain symbol in the scenario of the target configuration; if the terminal supports receiving the NR PDCCH on the first time-domain symbol, the network device may transmit the NR PDCCH to the terminal on the first time-domain symbol in the scenario of the target configuration.

In addition, in an embodiment, the network device may puncture the NR PDCCH according to the CRS pattern(s). When there are multiple CRS patterns, the network device may puncture the NR PDCCH according to one or more specific CRS patterns among the multiple CRS patterns.

In this case, the terminal can determine specific CRS pattern(s) according to network instructions, or determine the CRS pattern(s) according to a predefined rule. For example, multiple lists including specific CRS pattern(s) may be indicated to the terminal. For example, a signaling used for indication may be lte-CRS-PatternList1-r18 and lte-CRS-PatternList2-r18. When the terminal determines that the specific pattern(s) is configured via lte-CRS-PatternList1-r18 and other CRS patterns are configured via lte-CRS-PatternList2-r18, the terminal may determine that the network device only punctures the NR PDCCH according to the specific CRS pattern(s) and does not puncture the NR PDCCH according to other CRS patterns, and the terminal can also receive the NR PDCCH according to this puncturing manner.

It should be noted that in the embodiments of the present disclosure, whether it is expected to receive the NR PDCCH on the first time-domain symbol is determined at least based on the configuration information of the CRS, that is, the basis for determining whether it is expected to receive the NR PDCCH on the first time-domain symbol. In addition to the configuration information of the CRS, other information may also be included, such as configuration information of the NR PDCCH, etc., which will be specifically described in subsequent embodiments.

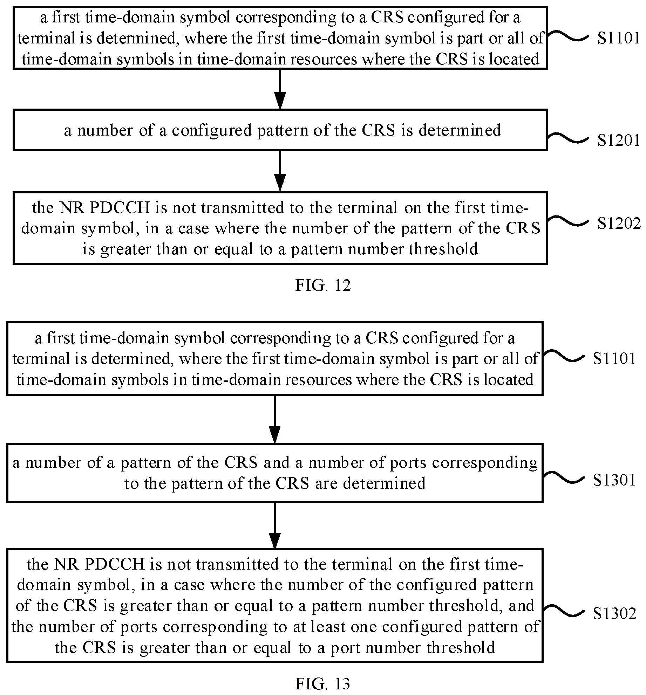

FIG. 12 is a schematic flow chart of another control channel transmitting method according to an embodiment of the present disclosure. As shown in FIG. 12, determining, at least the based on configuration information of the CRS, whether to transmit the NR PDCCH to the terminal on the first time-domain symbol includes the following steps.

In step S1201, a number of a configured pattern of the CRS is determined.

In step S1202, the NR PDCCH is not transmitted to the terminal on the first time-domain symbol, in a case where the number of the configured pattern of the CRS is greater than or equal to a pattern number threshold.

In an embodiment, in a case where the number of CRS pattern(s) is relatively large, for example, in a case where the number of CRS pattern(s) is greater than or equal to the pattern number threshold, it may be determined that the CRS occupies a relatively large number of REs on the first time-domain symbol, the terminal may not expect to receive any NR PDCCH on the first time-domain symbol, and the network device may not transmit any NR PDCCH to the terminal on the first time-domain symbol, thereby avoiding unnecessary consumption caused by the terminal receiving the NR PDCCH on the time-domain symbol with relatively few REs corresponding to the NR PDCCH.

In a case where the number of CRS pattern(s) is relatively small, for example, in a case where the number of CRS pattern(s) is less than the pattern number threshold, it may be determined that the CRS occupies a relatively small number of REs on the first time-domain symbol, the terminal may expect to receive an NR PDCCH on the first time-domain symbol, and the network device may transmit an NR PDCCH to the terminal on the first time-domain symbol.

As shown in FIG. 5, the first CRS pattern and the second CRS pattern are of the same structures as shown in FIG. 3. For example, the time-domain resources of the CORESET correspond to the first to third time-domain symbols, and overlap the first and second time-domain symbols in the time-domain resources corresponding to CRS. In this case, the first and second time-domain symbols can be determined as the first time-domain symbols, and whether to transmit the NR PDCCH to the terminal on the first time-domain symbols is further determined.

For example, in a case where the configuration pattern number threshold is 2, then in the case shown in FIG. 4, the number of CRS pattern(s) is 2, which is equal to the pattern number threshold, so the terminal does not expect to receive the NR PDCCH on the first time-domain symbols, and correspondingly, the network device does not transmit the NR PDCCH to the terminal on the first time-domain symbols. For example, the base station may transmit the NR PDCCH to the terminal on another symbol than the first time-domain symbols. Therefore, as shown in FIG. 4, the network device does not transmit the NR PDCCH to the terminal on the first one and second one of time-domain symbols, but transmits the NR PDCCH to the terminal only on the third one of time-domain symbols, that is, the network does not transmit the NR PDCCH to the terminal on the first one and second one of time-domain symbols, but transmits the NR PDCCH to the terminal only on the third one of time-domain symbols, thereby avoiding unnecessary consumption caused by that the network device transmits the NR PDCCH to the terminal on the time-domain symbol with relatively few REs corresponding to the NR PDCCH.

In a case where there is only one CRS pattern, the number of CRS pattern is 1, which is less than the pattern number threshold, then the terminal may expect to receive the NR PDCCH on the first time-domain symbol, and the network device may transmit the NR PDCCH to the terminal on the first time-domain symbol.

It should be noted that the pattern number threshold may be determined based on signaling transmitted by the network device, or may be specified by a predefined rule, or may be configured by the network device for the terminal according to capability information after the capability information (for example, an NR PDCCH parsing capability) is reported by the terminal.

FIG. 13 is a schematic flow chart of another control channel transmitting method according to an embodiment of the present disclosure. As shown in FIG. 13, determining, at least based on configuration information of the CRS, whether to transmit the NR PDCCH to the terminal on the first time-domain symbol includes the following steps.

In step S1301, a number of a pattern of the CRS and a number of ports corresponding to the pattern of the CRS are determined.

In step S1302, the NR PDCCH is not transmitted to the terminal on the first time-domain symbol, in a case where the number of the configured pattern of the CRS is greater than or equal to a pattern number threshold, and the number of ports corresponding to at least one configured pattern of the CRS is greater than or equal to a port number threshold.

In an embodiment, in a case where the number of the CRS pattern is relatively large, for example, in a case where the number of the CRS pattern is greater than or equal to the pattern number threshold, and the number of ports corresponding to the CRS pattern is relatively large, for example, the number of ports corresponding to at least one configured pattern of the CRS is greater than or equal to the port number threshold, it may be determined that the number of REs occupied by the CRS on the first time-domain symbol is relatively large, the terminal may not expect to receive the NR PDCCH on the first time-domain symbol, and the network device may not transmit the NR PDCCH to the terminal on the first time-domain symbol, thereby avoiding unnecessary consumption caused by the terminal receiving the NR PDCCH on the time-domain symbol with relatively few REs corresponding to the NR PDCCH.

It should be noted that whether it is expected to receive the NR PDCCH on the first time-domain symbol may also be determined only based on the number of ports corresponding to the CRS pattern. For example, if the number of ports corresponding to at least one of CRS pattern is greater than or equal to the port number threshold, it may be determined not to transmit the NR PDCCH to the terminal on the first time-domain symbol.

In addition, the port number threshold may be determined by the network device and indicated to the terminal via a signaling, or may be specified by a predefined rule, or configured by the network device for the terminal according to capability information after the capability information (for example, an NR PDCCH parsing capability) is reported by the terminal.

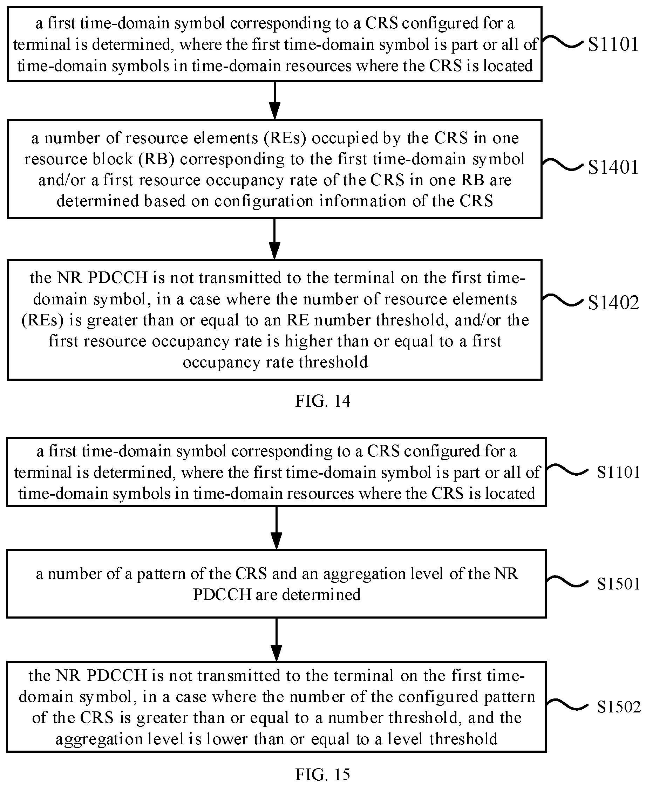

FIG. 14 is a schematic flow chart of another control channel transmitting method according to an embodiment of the present disclosure. As shown in FIG. 14, determining, at least based on configuration information of the CRS, whether to transmit the NR PDCCH to the terminal on the first time-domain symbol includes the following steps.

In step S1401, a number of resource elements (REs) occupied by the CRS in one resource block (RB) corresponding to the first time-domain symbol and/or a first resource occupancy rate of the CRS in one RB are determined based on configuration information of the CRS.

In step S1402, the NR PDCCH is not transmitted to the terminal on the first time-domain symbol, in a case where the number of resource elements (REs) is greater than or equal to an RE number threshold, and/or the first resource occupancy rate is higher than or equal to a first occupancy rate threshold.

In an embodiment, in a case where the number of REs occupied by the CRS in one RB corresponding to the first time-domain symbol is relatively large, for example, greater than or equal to the RE number threshold, it may be determined that the number of REs occupied by the CRS on the first time-domain symbol is relatively large, the terminal may not expect to receive the NR PDCCH on the first time-domain symbol, and the network device may not transmit the NR PDCCH to the terminal on the first time-domain symbol, thereby avoiding unnecessary consumption caused by that the network device transmits the NR PDCCH to the terminal on the time-domain symbol with relatively few REs corresponding to the NR PDCCH.

In an embodiment, if the first resource occupancy rate of the CRS in one RB corresponding to the first time domain symbol is relatively high, e.g., greater than or equal to the first occupancy rate threshold, it may be determined that the number of REs occupied by the CRS on the first time domain symbol is relatively large.

The first resource occupancy rate refers to a ratio of REs occupied by the CRS in one RB corresponding to the first time-domain symbol to all REs in one RB corresponding to the first time-domain symbol. For example, in the embodiment shown in FIG. 4, the first time-domain symbol contains the first one and second one of time-domain symbols, one time-domain symbol corresponds to 12 REs in a range of one RB, then the first one and second one of time-domain symbols correspond to a total of 24 REs, and the CRS occupies 16 REs on the first one and second one of time-domain symbols. The first resource occupancy rate may be calculated to be 16/24, which is approximately equal to 66.7%. For example, if the first occupancy rate threshold is 50%, it may be determined that the first resource occupancy rate is higher than the first occupancy rate threshold, so the terminal does not expect to receive the NR PDCCH on the first time-domain symbol, and the network device may not transmit the NR PDCCH to the terminal on the first time-domain symbol.

In a case where the first resource occupancy rate is higher than or equal to the first occupancy rate threshold, the terminal may not expect to receive the NR PDCCH on the first time-domain symbol, and the network device may not transmit the NR PDCCH to the terminal on the first time-domain symbol, thereby avoiding unnecessary consumption caused by the terminal receiving the NR PDCCH on the time-domain symbols with relatively few REs corresponding to the NR PDCCH.

The number of REs occupied by the CRS on the first time-domain symbol may be for one RB. Similarly, the first resource occupancy rate of the CRS on the first time-domain symbol may also be for one RB.

It should be noted that the RE number threshold and the first occupancy rate threshold may be determined according to a signaling transmitted by the network device, or may be specified by a predefined rule, or configured by the network device for the terminal according to capability information after the capability information (for example, an NR PDCCH parsing capability) is reported by the terminal.

As shown in FIG. 8, an example is still given that the first and second one of time-domain symbols are the first time-domain symbols. If the RE number threshold is equal to 5, the number of REs occupied by the CRS on the first one of time-domain symbols is 8, which is greater than the RE number threshold, the number of REs occupied by the CRS on the second one of time-domain symbols is 4, which is less than the RE number threshold. As a result, the terminal does not expect to receive the NR PDCCH on the first one of time-domain symbols, and can expect to receive the NR PDCCH on the second one of time-domain symbols, and the network device may also transmit the NR PDCCH to the terminal on the second one of time-domain symbols.

Since there is a rule in the numbers of REs occupied by the CRS patterns when corresponding to different numbers of ports, a relationship table may be set up for different RE number thresholds, which includes an association relationship between cases where the CRS patterns correspond to different numbers of ports and a symbol where the terminal expects to receive the NR PDCCH on the first time-domain symbol. For example, if the RE number threshold is equal to 4, the relationship table may be as shown in Table 1.

As shown in Table 1, for example, in the embodiment shown in FIG. 8, in the case of 4-port CRS + 2-port CRS, the terminal does not expect to receive the NR PDCCH on the first time-domain symbol (a corresponding symbol identifier is 0), transmits the NR PDCCH on the second time-domain symbol (a corresponding symbol identifier is 1), and also transmits the NR PDCCH on the third time-domain symbol (a corresponding symbol identifier is 2) because there is no CRS on the third time-domain symbol. As a result, transmission is performed on the second time-domain symbol and the third time-domain symbol, that is, to transmit the NR PDCCH to the terminal on the time-domain symbols with symbol identifiers 1 and 2.

On this basis, if the RE number threshold is determined, the relationship table corresponding to the RE number threshold can be determined, and then the identifier of the symbol where it is expected to receive the NR PDCCH is determined in the relationship table based on ports corresponding to multiple CRS patterns, so that it is expected to receive the NR PDCCH on a time-domain symbol corresponding to the symbol identifier.

In an embodiment, the RE number threshold and/or the first occupancy rate threshold are related to an aggregation level (AL) of the NR PDCCH and/or a format of downlink control information (DCI) in the NR PDCCH.

The RE number threshold may be determined according to the AL of the NR PDCCH. For example, the higher the AL is, the larger the RE number threshold is. For example, a level threshold may be set, if AL is higher than the level threshold, the RE number threshold is 6; if AL is lower than or equal to the level threshold, the RE number threshold is 4.

It should be noted that the level threshold may be determined based on a signaling transmitted by the network device, or may be specified by a predefined rule, or may be configured by the network device for the terminal according to capability information after the capability information of the terminal (for example, an NR PDCCH parsing capability) is reported to the network device.

In addition to determining the RE number threshold based on the AL of the NR PDCCH, the RE number threshold may also be determined based on the format of the DCI in the NR PDCCH. For example, the more bits the DCI format occupies, the smaller the RE number threshold is. For example, DCI format 1_1 occupies a relatively large number of bits, and the corresponding acceptable number threshold is relatively small, for example, the number threshold is equal to 3; DCI format 1_2 occupies a relatively small number of bits, and the corresponding acceptable number threshold is relatively large, for example, the number threshold is equal to 5.

Similarly, the first occupancy rate threshold may be determined according to the AL of the NR PDCCH. For example, the higher the AL is, the smaller the first occupancy rate threshold is. In addition to determining the first occupancy rate threshold based on the AL of the NR PDCCH, it may also be determined based on the format of the DCI in the NR PDCCH. For example, the more bits the DCI format occupies, the lower the first occupancy rate threshold is.

In an embodiment, determining, at least based on the configuration information of the CRS, whether to transmit the NR PDCCH to the terminal on the first time-domain symbol includes: determining whether to transmit the NR PDCCH to the terminal on the first time-domain symbol based on the configuration information of the CRS and configuration information of the NR PDCCH.

On the basis of determining whether it is expected to transmit the NR PDCCH on the first time-domain symbol based on the configuration information of the CRS, other information, such as the configuration information of the NR PDCCH, may be further considered, so that whether to transmit the NR PDCCH to the terminal on the first time-domain symbol is comprehensively determined based on the configuration information of the CRS and the configuration information of the NR PDCCH.

FIG. 15 is a schematic flow chart of another control channel transmitting method according to an embodiment of the present disclosure. As shown in FIG. 15, determining whether to transmit the NR PDCCH to the terminal on the first time-domain symbol based on the configuration information of the CRS and the configuration information of the NR PDCCH includes the following steps.

In step S1501, a number of a pattern of the CRS and an aggregation level of the NR PDCCH are determined.

In step S1502, the NR PDCCH is not transmitted to the terminal on the first time-domain symbol, in a case where the number of the configured pattern of the CRS is greater than or equal to a number threshold, and the aggregation level is lower than or equal to a level threshold.

In an embodiment, in a case where the number of the pattern(s) of the CRS is greater than or equal to the number threshold, the aggregation level (AL) of the NR PDCCH may be further considered.

In the case where the number of the pattern(s) of the CRS is greater than or equal to the number threshold, it may be determined that the number of REs occupied by the CRS on the first time-domain symbol is relatively large. However, when the AL of the NR PDCCH is relatively high, for example, higher than the level threshold, the NR PDCCH occupies relatively many REs, and even if the NR PDCCH is punctured according to multiple CRS patterns, the NR PDCCH can still have much information remaining. Therefore, in this case, the NR PDCCH can still be transmitted to the terminal on the first time-domain symbol.

However, when the AL of the NR PDCCH is relatively low, for example, lower than or equal to the level threshold, the NR PDCCH occupies relatively few REs, and the NR PDCCH has less remaining information after the NR PDCCH is punctured based on multiple CRS patterns. Therefore, in this case, the NR PDCCH may be transmitted to the terminal on the first time-domain symbol.

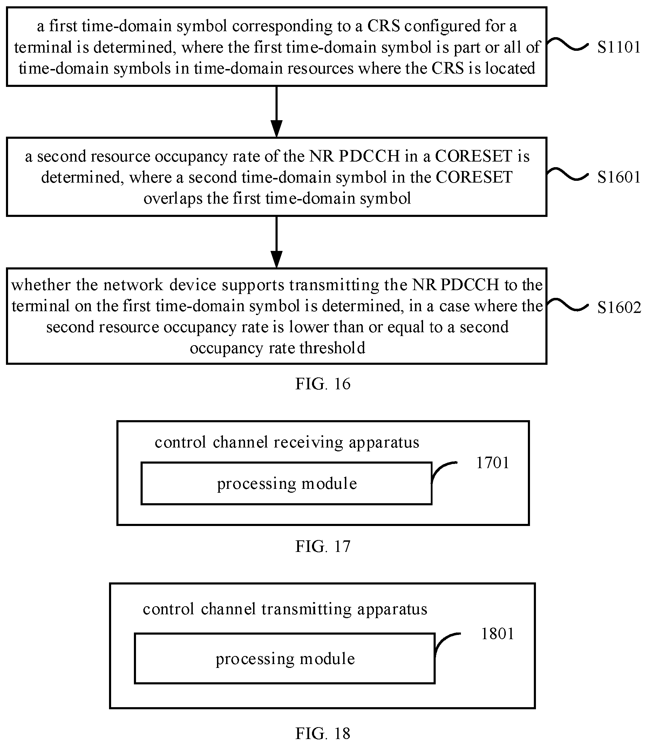

FIG. 16 is a schematic flow chart of another control channel transmitting method according to an embodiment of the present disclosure. As shown in FIG. 16, determining, at least the based on configuration information of the CRS, whether to transmit the NR PDCCH to the terminal on the first time-domain symbol includes the following steps.

In step S1601, a second resource occupancy rate of the NR PDCCH in a control resource set (CORESET) is determined, where a second time-domain symbol in the CORESET overlaps the first time-domain symbol.

In step S1602, whether the network device supports transmitting the NR PDCCH to the terminal on the first time-domain symbol is determined, in a case where the second resource occupancy rate is lower than or equal to a second occupancy rate threshold.

In an embodiment, the resource occupancy rate of the CRS in the CORESET of the NR PDCCH may be determined, for example, referred to as the second resource occupancy rate. If the second resource occupancy rate is relatively high, for example, higher than or equal to the second occupancy rate threshold, it may be determined that the REs occupied by the CRS on the second time-domain symbol corresponding to the CORESET, that is, on the first time-domain symbol, is relatively large.

The second resource occupancy rate refers to a ratio of REs occupied by the CRS in the CORESET of the NR PDCCH to all the REs in the CORESET. For example, in the embodiment shown in FIG. 4, a range of one RB is for illustration, the CORESET occupies the first, second and third time-domain symbols of the RB, one time-domain symbol within one RB range corresponds to 12 RE, and then three time-domain symbols correspond to a total of 36 REs. The CRS occupies a total of 16 REs on the first and second time-domain symbols of these three time-domain symbols, then the second resource occupancy rate may be calculated as 16/36, which is approximately equal to 44.4%. For example, if the second occupancy rate threshold is 20%, it may be determined that the second resource occupancy rate is higher than the second occupancy rate threshold. In this case, the terminal does not expect to receive the NR PDCCH on the first time-domain symbol, and the network device does not transmit the NR PDCCH to the terminal on the first time-domain symbol.

In this case, if the NR PDCCH is transmitted on the first time-domain symbol, more REs corresponding to the NR PDCCH may be punctured, so the network device may not transmit the NR PDCCH on the first time-domain resource. In this case, time-domain symbols occupied by NR PDCCH transmission are a subset of consecutive time-domain symbols of the CORESER (for example, in FIG. 4, the NR PDCCH is transmitted only on the third time-domain symbol). The network device may not transmit the NR PDCCH to the terminal on the first time-domain symbol, thereby avoiding unnecessary consumption caused by that the network device transmits the NR PDCCH to the terminal on a time-domain symbol with relatively few REs corresponding to the NR PDCCH.

Correspondingly, in a case where the second resource occupancy rate is relatively high, for example, higher than the second occupancy rate threshold, it may be determined that the number of REs occupied by the CRS on the second time-domain symbol of the CORESET, that is, on the first time-domain symbol, is relatively small. In this case, the network device may transmit the NR PDCCH on the first time-domain resource, and the terminal may expect to receive the NR PDCCH on the first time-domain symbol.

It should be noted that the second occupancy rate threshold may be determined based on a signaling transmitted by the network device, or may be specified by a predefined rule, or may be configured by the network device for the terminal according to capability information after the capability information of the terminal (for example, an NR PDCCH parsing capability) is reported to the network device.

In an embodiment, considering that some reference signals for the network device, such as SSB, are transmitted in a current slot, in order to avoid conflict between the NR PDCCH and an SSB signal, the NR PDCCH may be scheduled and transmitted on the time-domain symbol where the CRS is located, and a specific time-domain symbol occupied by NR PDCCH transmission may be determined based on the second resource occupancy rate. In a next slot, if the SSB is not transmitted in a corresponding slot, the corresponding PDCCH may be transmitted on a time-domain symbol not occupied by the CRS. The specific time-domain symbol occupied by the NR PDCCH transmission within the range of the CORESET may be determined dynamically, without reconfiguring the CORESET and a corresponding search space (searchspace) via the RRC signaling, thereby reducing PDCCH transmission delay and achieving more flexible resource scheduling.

Corresponding to the foregoing embodiments of the control channel receiving method and the control channel transmitting method, the present disclosure further provides embodiments of a control channel receiving apparatus and a control channel transmitting apparatus.

FIG. 17 is a schematic block diagram of a control channel receiving apparatus according to an embodiment of the present disclosure. The control channel receiving apparatus shown in the embodiment may be applicable to or performed by a terminal, which includes, but not limited to: a mobile phone, a tablet computer, a wearable device, a sensor, a device in Internet of Things and other communication devices. The terminal can communicate with a network device. The network device includes but is not limited to a network device in 4G, 5G, 6G and other communication systems, such as a base station, a core network, etc.

As shown in FIG. 17, the control channel receiving apparatus may include:
a processing module 1701, configured to determine a first time-domain symbol corresponding to a cell-specific reference signal (CRS), where the first time-domain symbol is part or all of time-domain symbols in time-domain resources where the CRS is located; and determine, at least based on configuration information of the CRS, whether it is expected to receive a new radio physical downlink control channel (NR PDCCH) on the first time-domain symbol.

In an embodiment, the processing module is configured to determine the number of a configured pattern of the CRS; and determine that it is not expected to receive the NR PDCCH on the first time-domain symbol, in a case where the number of the configured pattern of the CRS is greater than or equal to a pattern number threshold.

In an embodiment, the processing module is configured to determine a number of a configured pattern of the CRS and a number of ports corresponding to the pattern of the CRS; and determine that it is not expected to receive the NR PDCCH on the first time-domain symbol, in a case where the number of the configured pattern of the CRS is greater than or equal to a pattern number threshold, and a number of ports corresponding to at least one configured pattern of the CRS is greater than or equal to a port number threshold.

In an embodiment, the processing module is configured to determine a number of resource elements (REs) occupied by the CRS in one resource block (RB) corresponding to the first time-domain symbol and/or a first resource occupancy rate of the CRS in the RB based on the configuration information of the CRS; and determine that it is not expected to receive the NR PDCCH on the first time-domain symbol, in a case where the number of resource elements (REs) is greater than or equal to an RE number threshold, and/or the first resource occupancy rate is higher than or equal to a first occupancy rate threshold.

In an embodiment, the RE number threshold and/or the first occupancy rate threshold are related to an aggregation level of the NR PDCCH and/or a format of downlink control information (DCI) in the NR PDCCH.

In an embodiment, the processing module is configured to determine whether it is expected to receive the NR PDCCH on the first time-domain symbol based on the configuration information of the CRS and configuration information of the NR PDCCH.

In an embodiment, the processing module is configured to determine a number of a configured pattern of the CRS and an aggregation level of the NR PDCCH; and determine that it is not expected to receive the NR PDCCH on the first time-domain symbol, in a case where the number of the configured pattern of the CRS is greater than or equal to a number threshold, and the aggregation level is lower than or equal to a level threshold.

In an embodiment, the processing module is configured to determine a second resource occupancy rate of the CRS in a control resource set (CORESET) of the NR PDCCH, where a second time-domain symbol in the CORESET overlaps the first time-domain symbol; and determine that it is not expected to receive the NR PDCCH on the first time-domain symbol, in a case where the second resource occupancy rate is higher than or equal to a second occupancy rate threshold.

In an embodiment, the apparatus further includes: a transmitting module configured to transmit to a network device capability information used for indicating whether the terminal supports receiving the NR PDCCH on the first time-domain symbol in a case where the configuration information of the CRS meets a target configuration.

FIG. 18 is a schematic flow chart of a control channel transmitting apparatus according to an embodiment of the present disclosure. The control channel transmitting apparatus shown in the embodiment may be applicable to or performed by a network device. The network device can communicate with a terminal. The network device includes, but not limited to: a base station in 4G, 5G, 6G and other communication systems, such as a base station, a core network, etc. The terminal includes, but not limited to: a mobile phone, a tablet computer, a wearable device, a sensor, a device in Internet of Things and other communication devices.

As shown in FIG. 18, the control channel transmitting apparatus may include:
a processing module 1801, configured to determine a first time-domain symbol corresponding to a cell-specific reference signal (CRS) configured for a terminal, where the first time-domain symbol is part or all of time-domain symbols in time-domain resources where the CRS is located; and determine, at least based on configuration information of the CRS, whether to transmit a new radio physical downlink control channel (NR PDCCH) to the terminal on the first time-domain symbol.

In an embodiment, the processing module is configured to determine a number of a configured pattern of the CRS; and determine not to transmit the NR PDCCH to the terminal on the first time-domain symbol, in a case where the number of the configured pattern of the CRS is greater than or equal to a pattern number threshold.

In an embodiment, the processing module is configured to determine a number of a pattern of the CRS and a number of ports corresponding to the pattern of the CRS; and determine not to transmit the NR PDCCH to the terminal on the first time-domain symbol, in a case where the number of the configured pattern of the CRS is greater than or equal to a pattern number threshold, and a number of ports corresponding to at least one configured pattern of the CRS is greater than or equal to a port number threshold.

In an embodiment, the processing module is configured to determine a number of resource elements (REs) occupied by the CRS in one resource block (RB) on the first time-domain symbol and/or a first resource occupancy rate of the CRS in one RB based on the configuration information of the CRS; and determine not to transmit the NR PDCCH to the terminal on the first time-domain symbol, in a case where the number of resource elements (REs) is greater than or equal to an RE number threshold, and/or the first resource occupancy rate is higher than or equal to a first occupancy rate threshold.

In an embodiment, the RE number threshold and/or the first occupancy rate threshold are related to an aggregation level of the NR PDCCH and/or a format of downlink control information (DCI) in the NR PDCCH.

In an embodiment, the processing module is configured to determine whether to transmit the NR PDCCH to the terminal on the first time-domain symbol based on the configuration information of the CRS and configuration information of the NR PDCCH.

In an embodiment, the processing module is configured to determine a number of a pattern of the CRS and an aggregation level of the NR PDCCH; and determine not to transmit the NR PDCCH to the terminal on the first time-domain symbol, in a case where the number of the configured pattern of the CRS is greater than or equal to a number threshold, and the aggregation level is lower than or equal to a level threshold.

In an embodiment, the processing module is configured to determine a second resource occupancy rate of the NR PDCCH in a control resource set (CORESET), where a second time-domain symbol in the CORESET overlaps the first time-domain symbol; and determine not to transmit the NR PDCCH to the terminal on the first time-domain symbol, in a case where the second resource occupancy rate is higher than or equal to a second occupancy rate threshold.

In an embodiment, the device further includes: a receiving module configured to receive capability information transmitted by the terminal; and determine whether the network device supports transmitting the NR PDCCH to the terminal on the first time-domain symbol, in a case where it is determined based on the capability information that the configuration information of the CRS meets a target configuration.

Regarding the apparatuses in the above embodiments, the specific manner in which each module performs operations has been described in detail in the relevant method embodiments, and will not be described in detail here.

As for the apparatus embodiments, reference may be made to partial description of the method embodiments for relevant details because they basically corresponds to the method embodiments. The apparatus embodiments described above are only illustrative. The modules described as separate components may or may not be physically separated. The components shown as modules may or may not be physical modules, that is, they may be located in one place, or distributed to multiple network modules. Some or all of the modules can be selected according to actual needs to achieve the purpose of the solution of the embodiments. Persons of ordinary skill in the art can understand and implement the method without any creative efforts.

An embodiment of the present disclosure further provides a communication device, including: a processor; and a memory configured to store a computer program. The processor is configured to execute the computer program to implement the control channel receiving method described in any of the above embodiments

An embodiment of the present disclosure further provides a communication device, including: a processor; and a memory configured to store a computer program. The processor is configured to execute the computer program to implement the control channel transmitting method described in any of the above embodiments

An embodiment of the present disclosure further provides a computer-readable storage medium, configured to store a computer program. When the computer program is executed by a processor, steps in the control channel receiving method described in any of the above embodiments are implemented.

An embodiment of the present disclosure further provides a computer-readable storage medium, configured to store a computer program. When the computer program is executed by a processor, steps in the control channel transmitting method described in any of the above embodiments are implemented.

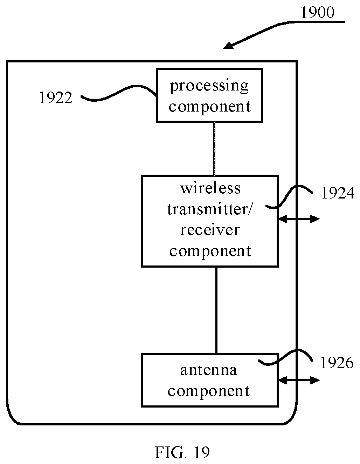

As shown in FIG. 19, FIG. 19 is a schematic block diagram of a control channel receiving apparatus 1900 according to an embodiment of the present disclosure. The apparatus 1900 may be provided as a base station. Referring to FIG. 19, the apparatus 1900 includes a processing component 1922, a wireless transmitter/receiver component 1924, an antenna component 1926, and a signal processing portion specific to a wireless interface. The processing component 1922 may further include one or more processors. One of the processors in the processing component 1922 may be configured to implement the control channel transmitting method described in any of the above embodiments.

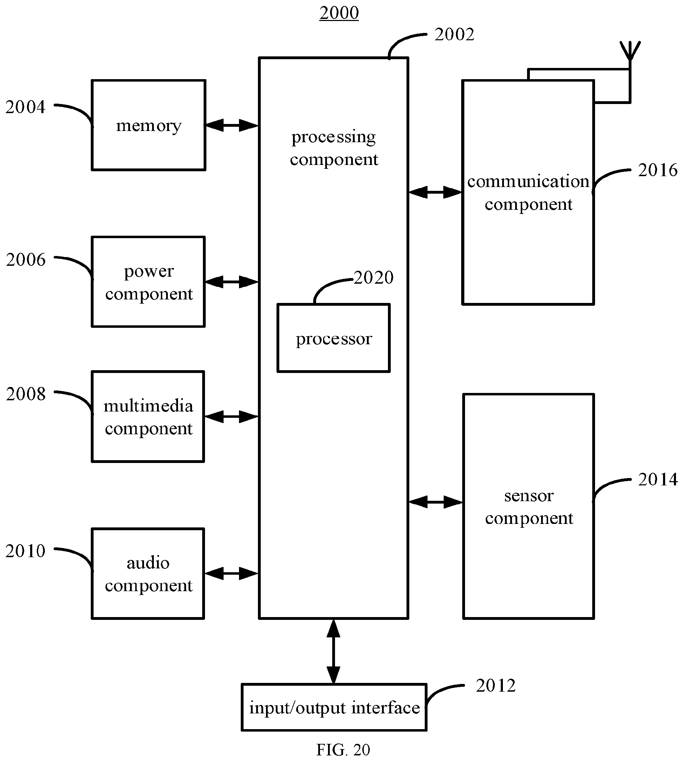

FIG. 20 is a schematic block diagram of a control channel transmitting apparatus 2000 according to an embodiment of the present disclosure. For example, the apparatus 2000 may be a mobile phone, a computer, a digital broadcast terminal, a message transceiver device, a game console, a tablet device, a medical device, a fitness device, a personal digital assistant, or the like.

Referring to FIG. 20, the apparatus 2000 may include one or more of the following components: a processing component 2002, a memory 2004, a power supply component 2006, a multimedia component 2008, an audio component 2010, an input/output (I/O) interface 2012, a sensor component 2014, and a communication component 2016.

The processing component 2002 typically controls overall operations of the apparatus 2000, such as operations associated with display, phone calls, data communications, camera operations, and recording operations. The processing component 2002 may include one or more processors 2020 to execute instructions to complete all or part of steps of the above control channel transmitting method. Additionally, the processing component 2002 may include one or more modules which facilitate the interaction between processing component 2002 and other components. For example, the processing component 2002 may include a multimedia module to facilitate the interaction between the multimedia component 2008 and the processing component 2002.

The memory 2004 is configured to store various types of data to support operations in the apparatus 2000. Examples of such data include instructions for any applications or methods operated on the apparatus 2000, contact data, phonebook data, messages, pictures, video, etc. The memory 2004 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power supply component 2006 provides power to various components of the apparatus 2000. The power supply component 2006 may include a power management system, one or more power sources, and any other components associated with the generation, management, and distribution of power in the apparatus 2000.

The multimedia component 2008 includes a screen providing an output interface between the apparatus 2000 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2008 includes a front-facing camera and/or a rear-facing camera. When the apparatus 2000 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 2010 is configured to output and/or input audio signals. For example, the audio component 2010 includes a microphone (MIC) configured to receive an external audio signal when the apparatus 2000 is in an operation mode, such as a call mode, a recording mode, and a voice recognition mode. The received audio signal may be further stored in the memory 2004 or transmitted via the communication component 2016. In some embodiments, the audio component 2010 further includes a speaker to output audio signals.

The I/O interface 2012 provides an interface between the processing component 2002 and peripheral interface modules. The peripheral interface modules may be a keyboard, a click wheel, buttons, and the like. The buttons may include, but not limited to, a home button, a volume button, a starting button, and a locking button.

The sensor component 2014 includes one or more sensors to provide status assessments of various aspects of the apparatus 2000. For instance, the sensor component 2014 may detect an open/closed status of the apparatus 2000, relative positioning of components, e.g., the display and the keypad, of the apparatus 2000, a change in position of the apparatus 2000 or a component of the apparatus 2000, a presence or absence of user contact with the apparatus 2000, an orientation or an acceleration/deceleration of the apparatus 2000, and a change in temperature of the apparatus 2000. The sensor component 2014 may include a proximity sensor configured to detect the presence of nearby objects without any physical contact. The sensor component 2014 may also include a light sensor, such as a Complementary Metal Oxide Semiconductor (CMOS) or Charge-Coupled Device (CCD) image sensor, for use in imaging applications. In some embodiments, the sensor component 2014 may also include an accelerometer sensor, a gyroscope sensor, a magnetic sensor, a pressure sensor, or a temperature sensor.

The communication component 2016 is configured to facilitate communication, wired or wirelessly, between the apparatus 2000 and other devices. The apparatus 2000 can access a wireless network based on a communication standard, such as Wi-Fi, 2G or 3G, 4G LTE, 5G NR or a combination thereof. In an exemplary embodiment, the communication component 2016 receives a broadcast signal or broadcast associated information from an external broadcast management system via a broadcast channel. In an exemplary embodiment, the communication component 2016 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the apparatus 2000 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above-described control channel transmitting method.

In the exemplary embodiments, there is also provided a non-transitory computer readable storage medium including executable instructions, such as the memory 2004. The instructions is executable by the processor 2020 in the apparatus 2000, for performing the above control channel transmitting method. For example, the non-transitory computer-readable storage medium may be a ROM, a Random Access Memory (RAM), a CD-ROM, a magnetic tape, a floppy disc, and an optical data storage device.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and to include common knowledge or conventional technical means in the technical field that are not disclosed in the disclosure. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure is only limited by the appended claims.

It should be noted that the relational terms herein, such as "first" and "second", are used only for differentiating one entity or operation, from another entity or operation, which, however do not necessarily require or imply that there should be any real relationship or sequence. Moreover, the terms "comprise", "include" or any other variations thereof are meant to cover non-exclusive including, so that the process, method, article or device comprising a series of elements do not only comprise those elements, but also comprise other elements that are not explicitly listed or also comprise the inherent elements of the process, method, article or device. In the case that there are no more restrictions, an element qualified by the statement "comprises a..." does not exclude the presence of additional identical elements in the process, method, article or device that comprises the said element.

## Claims

1. A control channel receiving method, performed by a terminal, comprising:
determining (S101) a first time-domain symbol corresponding to a cell-specific reference signal, CRS, wherein the first time-domain symbol is part or all of time-domain symbols in time-domain resources where the CRS is located; and
determining (S102), at least based on configuration information of the CRS, whether it is expected to detect a new radio physical downlink control channel, NR PDCCH, on the first time-domain symbol.

2. The method according to claim 1, wherein determining (S102), at least based on the configuration information of the CRS, whether it is expected to detect the NR PDCCH on the first time-domain symbol comprises:
determining (S401) a number of a configured pattern of the CRS; and
determining (S402) that it is not expected to detect the NR PDCCH on the first time-domain symbol, in a case where the number of the configured pattern of the CRS is greater than or equal to a pattern number threshold.

3. The method according to claim 1 or 2, wherein determining (S102), at least based on the configuration information of the CRS, whether it is expected to detect the NR PDCCH on the first time-domain symbol comprises:
determining (S601) a number of a configured pattern of the CRS and a number of ports corresponding to each configured pattern of the CRS respectively; and
determining (S602) that it is not expected to detect the NR PDCCH on the first time-domain symbol, in a case where the number of the configured pattern of the CRS is greater than or equal to a pattern number threshold, and a number of ports corresponding to at least one configured pattern of the CRS is greater than or equal to a port number threshold.

4. The method according to any one of claims 1 to 3, wherein determining (S102), at least based on the configuration information of the CRS, whether it is expected to detect the NR PDCCH on the first time-domain symbol comprises:
determining (S701) at least one of a number of resource elements, REs, occupied by the CRS on the first time-domain symbol or a first resource occupancy rate of the CRS on the first time-domain symbol based on the configuration information of the CRS; and
determining (S702) that it is not expected to detect the NR PDCCH on the first time-domain symbol, in a case where the number of resource elements, REs, is greater than or equal to an RE number threshold, or the first resource occupancy rate is higher than or equal to a first occupancy rate threshold, or the number of REs is greater than or equal to the RE number threshold and the first resource occupancy rate is higher than or equal to the first occupancy rate threshold;
optionally at least one of the RE number threshold or the first occupancy rate threshold is related to at least one of an NR PDCCH aggregation level or a format of downlink control information, DCI, in the NR PDCCH.

5. The method according to any one of claims 1 to 4, wherein determining (S102), at least based on the configuration information of the CRS, whether it is expected to detect the NR PDCCH on the first time-domain symbol comprises one of:
determining whether it is expected to detect the NR PDCCH on the first time-domain symbol based on the configuration information of the CRS and configuration information of the NR PDCCH; or
determining (S1001) a second resource occupancy rate of the CRS in a control resource set, CORESET, of the NR PDCCH, wherein a second time-domain symbol in the CORESET overlaps the first time-domain symbol, and determining (S1002) that it is not expected to detect the NR PDCCH on the first time-domain symbol, in a case where the second resource occupancy rate is greater than or equal to a second occupancy rate threshold;
optionally wherein determining whether it is expected to detect the NR PDCCH on the first time-domain symbol based on the configuration information of the CRS and the configuration information of the NR PDCCH comprises:
determining (S901) a number of a configured pattern of the CRS and an aggregation level of the NR PDCCH; and
determining (S902) that it is not expected to detect the NR PDCCH on the first time-domain symbol, in a case where the number of the configured pattern of the CRS is greater than or equal to a number threshold, and the aggregation level is less than or equal to a level threshold.

6. The method according to any one of claims 1 to 5, further comprising:
transmitting, to a network device, capability information used for indicating whether the terminal supports receiving the NR PDCCH on the first time-domain symbol in a case where the configuration information of the CRS meets a target configuration.

7. A control channel transmitting method, performed by a network device, comprising:
determining (S1101) a first time-domain symbol corresponding to a cell-specific reference signal, CRS, configured for a terminal, wherein the first time-domain symbol is part or all of time-domain symbols in time-domain resources where the CRS is located; and
determining (S1102), at least based on configuration information of the CRS, whether to expect the terminal to detect a new radio physical downlink control channel, NR PDCCH, on the first time-domain symbol.

8. The method according to claim 7, wherein determining (S1102), at least based on the configuration information of the CRS, whether to expect the terminal to detect the NR PDCCH on the first time-domain symbol comprises:
determining (S1201) a number of a configured pattern of the CRS; and
determining (S1202) not to expect the terminal to detect the NR PDCCH on the first time-domain symbol, in a case where the number of the configured pattern of the CRS is greater than or equal to a pattern number threshold.

9. The method according to claim 7 or 8, wherein determining (S1102), at least based on the configuration information of the CRS, whether to expect the terminal to detect the NR PDCCH on the first time-domain symbol comprises:
determining (S1301) a number of a configured pattern of the CRS and a number of ports corresponding to each configured pattern of the CRS respectively; and
determining (S1302) not to expect the terminal to detect the NR PDCCH on the first time-domain symbol, in a case where the number of the configured pattern of the CRS is greater than or equal to a pattern number threshold, and a number of ports corresponding to at least one configured pattern of the CRS is greater than or equal to a port number threshold.

10. The method according to any one of claims 7 to 9, wherein determining (S1102), at least based on the configuration information of the CRS, whether to expect the terminal to detect the NR PDCCH on the first time-domain symbol comprises:
determining (S1401) at least one of a number of resource elements, REs, occupied by the CRS on the first time-domain symbol or a first resource occupancy rate of the CRS on the first time-domain symbol based on the configuration information of the CRS; and
determining (S1402) not to expect the terminal to detect the NR PDCCH on the first time-domain symbol, in a case where the number of resource elements, REs, is greater than or equal to an RE number threshold, or the first resource occupancy rate is higher than or equal to a first occupancy rate threshold, or the number of REs is greater than or equal to the RE number threshold and the first resource occupancy rate is higher than or equal to the first occupancy rate threshold;
optionally wherein at least one of the RE number threshold or the first occupancy rate threshold is related to at least one of an NR PDCCH aggregation level or a format of downlink control information, DCI, in the NR PDCCH.

11. The method according to any one of claims 7 to 10, wherein determining (S1102), at least based on the configuration information of the CRS, whether to expect the terminal to detect the NR PDCCH on the first time-domain symbol comprises one of:
determining whether to expect the terminal to detect the NR PDCCH on the first time-domain symbol based on the configuration information of the CRS and configuration information of the NR PDCCH; or
determining (S1601) a second resource occupancy rate of the CRS in a control resource set, CORESET, wherein a second time-domain symbol in the CORESET overlaps the first time-domain symbol, and determining (S1602) not to expect the terminal to detect the NR PDCCH on the first time-domain symbol, in a case where the second resource occupancy rate is greater than or equal to a second occupancy rate threshold;
optionally wherein determining whether to expect the terminal to detect the NR PDCCH to on the first time-domain symbol based on the configuration information of the CRS and the configuration information of the NR PDCCH comprises:
determining (S1501) a number of a configured pattern of the CRS and an aggregation level of the NR PDCCH; and
determining (S1502) not to expect the terminal to detect the NR PDCCH on the first time-domain symbol, in a case where the number of the configured pattern of the CRS is greater than or equal to a number threshold, and the aggregation level is less than or equal to a level threshold.

12. The method according to any one of claims 7 to 11, further comprising:
receiving capability information transmitted by the terminal; and
determining whether to expect the terminal to detect the NR PDCCH on the first time-domain symbol, in a case where it is determined based on the capability information that the configuration information of the CRS meets a target configuration.

13. A terminal, comprising:
a processor; and
a memory configured to store a computer program,
wherein the processor is configured to execute the computer program to implement the control channel receiving method according to any one of claims 1 to 6.

14. A network device, comprising:
a processor; and
a memory configured to store a computer program,
wherein the processor is configured to execute the computer program to implement the control channel transmitting method according to any one of claims 7 to 12.

15. A non-transitory computer-readable storage medium, configured to store a computer program, wherein when the computer program is executed by a processor, steps in the control channel receiving method according to any one of claims 1 to 12 are implemented.

## Patentansprüche

1. Ein Steuerkanalempfangsverfahren, das von einem Endgerät durchgeführt wird, das folgende Schritte aufweist:
Bestimmen (S101) eines ersten Zeitbereichssymbols, das einem zellenspezifischen Referenzsignal, CRS, entspricht, wobei das erste Zeitbereichssymbol ein Teil der oder alle Zeitbereichssymbole in Zeitbereichsressourcen ist, in denen sich das CRS befindet; und
Bestimmen (S102), zumindest basierend auf Konfigurationsinformationen des CRS, ob erwartet wird, dass ein physikalischer Downlink-Steuerkanal für New Radio, NR-PDCCH, auf dem ersten Zeitbereichssymbol erfasst wird.

2. Das Verfahren gemäß Anspruch 1, wobei das Bestimmen (S102), zumindest basierend auf den Konfigurationsinformationen des CRS, ob erwartet wird, dass der NR-PDCCH auf dem ersten Zeitbereichssymbol erfasst wird, folgende Schritte aufweist:
Bestimmen (S401) einer Anzahl eines konfigurierten Musters des CRS; und
Bestimmen (S402), dass nicht erwartet wird, dass der NR-PDCCH auf dem ersten Zeitbereichssymbol erfasst wird, in einem Fall, in dem die Anzahl des konfigurierten Musters des CRS größer oder gleich einer Musteranzahlschwelle ist.

3. Das Verfahren gemäß Anspruch 1 oder 2, wobei das Bestimmen (S102), zumindest basierend auf den Konfigurationsinformationen des CRS, ob erwartet wird, dass der NR-PDCCH auf dem ersten Zeitbereichssymbol erfasst wird, folgende Schritte aufweist:
Bestimmen (S601) einer Anzahl eines konfigurierten Musters des CRS und einer Anzahl von Anschlüssen, die jeweils jedem konfigurierten Muster des CRS entsprechen; und
Bestimmen (S602), dass nicht erwartet wird, dass der NR-PDCCH auf dem ersten Zeitbereichssymbol erfasst wird, in einem Fall, in dem die Anzahl des konfigurierten Musters des CRS größer oder gleich einer Musteranzahlschwelle ist und eine Anzahl von Anschlüssen, die zumindest einem konfigurierten Muster des CRS entspricht, größer oder gleich einer Anschlussanzahlschwelle ist.

4. Das Verfahren gemäß einem der Ansprüche 1 bis 3, wobei das Bestimmen (S102), zumindest basierend auf den Konfigurationsinformationen des CRS, ob erwartet wird, dass der NR-PDCCH auf dem ersten Zeitbereichssymbol erfasst wird, folgende Schritte aufweist:
Bestimmen (S701) zumindest eines von einer Anzahl von Ressourcenelementen, RE, die durch das CRS auf dem ersten Zeitbereichssymbol belegt sind, oder einer ersten Ressourcenbelegungsrate des CRS auf dem ersten Zeitbereichssymbol basierend auf den Konfigurationsinformationen des CRS; und
Bestimmen (S702), dass nicht erwartet wird, dass der NR-PDCCH auf dem ersten Zeitbereichssymbol erfasst wird, in einem Fall, in dem die Anzahl von Ressourcenelementen, RE, größer oder gleich einer RE-Anzahlschwelle ist oder die erste Ressourcenbelegungsrate größer oder gleich einer ersten Belegungsratenschwelle ist oder die Anzahl von RE größer oder gleich der RE-Anzahlschwelle ist und die erste Ressourcenbelegungsrate größer oder gleich der ersten Belegungsratenschwelle ist;
wobei optional zumindest eine von der RE-Anzahlschwelle oder der ersten Belegungsratenschwelle mit zumindest einem von einer NR-PDCCH-Aggregationsebene oder einem Format von Downlink-Steuerinformationen, DCI, in dem NR-PDCCH in Beziehung steht.

5. Das Verfahren gemäß einem der Ansprüche 1 bis 4, wobei das Bestimmen (S102), zumindest basierend auf den Konfigurationsinformationen des CRS, ob erwartet wird, dass der NR-PDCCH auf dem ersten Zeitbereichssymbol erfasst wird, einen der folgenden Schritte aufweist:
Bestimmen, ob erwartet wird, dass der NR-PDCCH auf dem ersten Zeitbereichssymbol erfasst wird, basierend auf den Konfigurationsinformationen des CRS und Konfigurationsinformationen des NR-PDCCH; oder
Bestimmen (S1001) einer zweiten Ressourcenbelegungsrate des CRS in einem Steuerressourcensatz, CORESET, des NR-PDCCH, wobei ein zweites Zeitbereichssymbol in dem CORESET das erste Zeitbereichssymbol überlappt, und Bestimmen (S1002), dass nicht erwartet wird, dass der NR-PDCCH auf dem ersten Zeitbereichssymbol erfasst wird, in einem Fall, in dem die zweite Ressourcenbelegungsrate größer oder gleich einer zweiten Belegungsratenschwelle ist;
wobei optional das Bestimmen, ob erwartet wird, dass der NR-PDCCH auf dem ersten Zeitbereichssymbol erfasst wird, basierend auf den Konfigurationsinformationen des CRS und den Konfigurationsinformationen des NR-PDCCH folgende Schritte aufweist:
Bestimmen (S901) einer Anzahl eines konfigurierten Musters des CRS und einer Aggregationsebene des NR-PDCCH; und
Bestimmen (S902), dass nicht erwartet wird, dass der NR-PDCCH auf dem ersten Zeitbereichssymbol erfasst wird, in einem Fall, in dem die Anzahl des konfigurierten Musters des CRS größer oder gleich einer Anzahlschwelle ist und die Aggregationsebene kleiner oder gleich einer Ebenenschwelle ist.

6. Das Verfahren gemäß einem der Ansprüche 1 bis 5, das ferner folgende Schritte aufweist:
Senden, an eine Netzwerkvorrichtung, von Fähigkeitsinformationen, die verwendet werden zum Anzeigen, ob das Endgerät das Empfangen des NR-PDCCH auf dem ersten Zeitbereichssymbol unterstützt, in einem Fall, in dem die Konfigurationsinformationen des CRS eine Zielkonfiguration erfüllen.

7. Ein Steuerkanalsendeverfahren, das von einer Netzwerkvorrichtung durchgeführt wird, das folgende Schritte aufweist:
Bestimmen (S1101) eines ersten Zeitbereichssymbols, das einem zellenspezifischen Referenzsignal, CRS, entspricht, das für ein Endgerät konfiguriert ist, wobei das erste Zeitbereichssymbol ein Teil der oder alle Zeitbereichssymbole in Zeitbereichsressourcen ist, in denen sich das CRS befindet; und
Bestimmen (S1102), zumindest basierend auf Konfigurationsinformationen des CRS, ob erwartet wird, dass das Endgerät einen physikalischen Downlink-Steuerkanal für New Radio, NR-PDCCH, auf dem ersten Zeitbereichssymbol erfasst.

8. Das Verfahren gemäß Anspruch 7, wobei das Bestimmen (S1102), zumindest basierend auf den Konfigurationsinformationen des CRS, ob erwartet wird, dass das Endgerät den NR-PDCCH auf dem ersten Zeitbereichssymbol erfasst, folgende Schritte aufweist:
Bestimmen (S1201) einer Anzahl eines konfigurierten Musters des CRS; und
Bestimmen (S1202), dass nicht erwartet wird, dass das Endgerät den NR-PDCCH auf dem ersten Zeitbereichssymbol erfasst, in einem Fall, in dem die Anzahl des konfigurierten Musters des CRS größer oder gleich einer Musteranzahlschwelle ist.

9. Das Verfahren gemäß Anspruch 7 oder 8, wobei das Bestimmen (S1102), zumindest basierend auf den Konfigurationsinformationen des CRS, ob erwartet wird, dass das Endgerät den NR-PDCCH auf dem ersten Zeitbereichssymbol erfasst, folgende Schritte aufweist:
Bestimmen (S1301) einer Anzahl eines konfigurierten Musters des CRS und einer Anzahl von Anschlüssen, die jeweils jedem konfigurierten Muster des CRS entsprechen; und
Bestimmen (S1302), dass nicht erwartet wird, dass das Endgerät den NR-PDCCH auf dem ersten Zeitbereichssymbol erfasst, in einem Fall, in dem die Anzahl des konfigurierten Musters des CRS größer oder gleich einer Musteranzahlschwelle ist und eine Anzahl von Anschlüssen, die zumindest einem konfigurierten Muster des CRS entspricht, größer oder gleich einer Anschlussanzahlschwelle ist.

10. Das Verfahren gemäß einem der Ansprüche 7 bis 9, wobei das Bestimmen (S1102), zumindest basierend auf den Konfigurationsinformationen des CRS, ob erwartet wird, dass das Endgerät den NR-PDCCH auf dem ersten Zeitbereichssymbol erfasst, folgende Schritte aufweist:
Bestimmen (S1401) zumindest eines von einer Anzahl von Ressourcenelementen, RE, die durch das CRS auf dem ersten Zeitbereichssymbol belegt sind, oder einer ersten Ressourcenbelegungsrate des CRS auf dem ersten Zeitbereichssymbol basierend auf den Konfigurationsinformationen des CRS; und
Bestimmen (S1402), dass nicht erwartet wird, dass das Endgerät den NR-PDCCH auf dem ersten Zeitbereichssymbol erfasst, in einem Fall, in dem die Anzahl von Ressourcenelementen, RE, größer oder gleich einer RE-Anzahlschwelle ist oder die erste Ressourcenbelegungsrate größer oder gleich einer ersten Belegungsratenschwelle ist oder die Anzahl von RE größer oder gleich der RE-Anzahlschwelle ist und die erste Ressourcenbelegungsrate größer oder gleich der ersten Belegungsratenschwelle ist;
wobei optional zumindest eine von der RE-Anzahlschwelle oder der ersten Belegungsratenschwelle mit zumindest einem von einer NR-PDCCH-Aggregationsebene oder einem Format von Downlink-Steuerinformationen, DCI, in dem NR-PDCCH in Beziehung steht.

11. Das Verfahren gemäß einem der Ansprüche 7 bis 10, wobei das Bestimmen (S1102), zumindest basierend auf den Konfigurationsinformationen des CRS, ob erwartet wird, dass das Endgerät den NR-PDCCH auf dem ersten Zeitbereichssymbol erfasst, einen der folgenden Schritte aufweist:
Bestimmen, ob erwartet wird, dass das Endgerät den NR-PDCCH auf dem ersten Zeitbereichssymbol erfasst, basierend auf den Konfigurationsinformationen des CRS und Konfigurationsinformationen des NR-PDCCH; oder
Bestimmen (S1601) einer zweiten Ressourcenbelegungsrate des CRS in einem Steuerressourcensatz, CORESET, wobei ein zweites Zeitbereichssymbol in dem CORESET das erste Zeitbereichssymbol überlappt, und Bestimmen (S1602), dass nicht erwartet wird, dass das Endgerät den NR-PDCCH auf dem ersten Zeitbereichssymbol erfasst, in einem Fall, in dem die zweite Ressourcenbelegungsrate größer oder gleich einer zweiten Belegungsratenschwelle ist;
wobei optional das Bestimmen, ob erwartet wird, dass das Endgerät den NR-PDCCH auf dem ersten Zeitbereichssymbol erfasst, basierend auf den Konfigurationsinformationen des CRS und den Konfigurationsinformationen des NR-PDCCH folgende Schritte aufweist:
Bestimmen (S1501) einer Anzahl eines konfigurierten Musters des CRS und einer Aggregationsebene des NR-PDCCH; und
Bestimmen (S1502), dass nicht erwartet wird, dass das Endgerät den NR-PDCCH auf dem ersten Zeitbereichssymbol erfasst, in einem Fall, in dem die Anzahl des konfigurierten Musters des CRS größer oder gleich einer Anzahlschwelle ist und die Aggregationsebene kleiner oder gleich einer Ebenenschwelle ist.

12. Das Verfahren gemäß einem der Ansprüche 7 bis 11, das ferner folgende Schritte aufweist:
Empfangen von Fähigkeitsinformationen, die von dem Endgerät gesendet werden; und
Bestimmen, ob erwartet wird, dass das Endgerät den NR-PDCCH auf dem ersten Zeitbereichssymbol erfasst, in einem Fall, in dem basierend auf den Fähigkeitsinformationen bestimmt wird, dass die Konfigurationsinformationen des CRS eine Zielkonfiguration erfüllen.

13. Ein Endgerät, das folgende Merkmale aufweist:
einen Prozessor; und
einen Speicher, der dazu konfiguriert ist, ein Computerprogramm zu speichern,
wobei der Prozessor dazu konfiguriert ist, das Computerprogramm auszuführen, um das Steuerkanalempfangsverfahren gemäß einem der Ansprüche 1 bis 6 zu implementieren.

14. Eine Netzwerkvorrichtung, die folgende Merkmale aufweist:
einen Prozessor; und
einen Speicher, der dazu konfiguriert ist, ein Computerprogramm zu speichern,
wobei der Prozessor dazu konfiguriert ist, das Computerprogramm auszuführen, um das Steuerkanalsendeverfahren gemäß einem der Ansprüche 7 bis 12 zu implementieren.

15. Ein nicht flüchtiges computerlesbares Speichermedium, das dazu konfiguriert ist, ein Computerprogramm zu speichern, wobei, wenn das Computerprogramm von einem Prozessor ausgeführt wird, Schritte in dem Steuerkanalempfangsverfahren gemäß einem der Ansprüche 1 bis 12 implementiert werden.

## Revendications

1. Procédé de réception d'un canal de commande, mis en œuvre par un terminal, comprenant le fait de :
déterminer (S101) un premier symbole dans le domaine temporel correspondant à un signal de référence spécifique à une cellule, CRS, dans lequel le premier symbole dans le domaine temporel constitue une partie ou la totalité des symboles dans le domaine temporel dans les ressources dans le domaine temporel où se trouve le CRS ; et
déterminer (S102), au moins sur la base des informations de configuration du CRS, s'il est prévu de détecter un nouveau canal de commande physique radio en liaison descendante, NR PDCCH, sur le premier symbole dans le domaine temporel.

2. Procédé selon la revendication 1, dans lequel la détermination (S102), au moins sur la base des informations de configuration du CRS, s'il est prévu de détecter le PDCCH NR sur le premier symbole dans le domaine temporel, comprend le fait de :
déterminer (S401) un nombre d'un motif configuré du CRS ; et
déterminer (S402) qu'il n'est pas prévu de détecter le PDCCH NR sur le premier symbole dans le domaine temporel, dans un cas où le nombre du motif configuré du CRS est supérieur ou égal à un seuil de nombre de motif.

3. Procédé selon la revendication 1 ou 2, dans lequel la détermination (S102), au moins sur la base des informations de configuration du CRS, s'il est prévu de détecter le PDCCH NR sur le premier symbole dans le domaine temporel, comprend le fait de :
déterminer (S601) un nombre d'un motif configuré du CRS et un nombre de ports correspondant respectivement à chaque motif configuré du CRS ; et
déterminer (S602) qu'il n'est pas prévu de détecter le PDCCH NR sur le premier symbole dans le domaine temporel, dans un cas où le nombre du motif configuré du CRS est supérieur ou égal à un seuil de nombre de motif, et un nombre de ports correspondant à au moins un motif configuré du CRS est supérieur ou égal à un seuil de nombre de port.

4. Procédé selon l'une quelconque des revendication 1 à 3, dans lequel la détermination (S102), au moins sur la base des informations de configuration du CRS, s'il est prévu de détecter le PDCCH NR sur le premier symbole dans le domaine temporel, comprend le fait de :
déterminer (S701) au moins l'un parmi un certain nombre d'éléments de ressource, RE, occupés par le CRS sur le premier symbole dans le domaine temporel ou un premier taux d'occupation des ressources du CRS sur le premier symbole dans le domaine temporel, sur la base des informations de configuration du CRS ; et
déterminer (S702) qu'il n'est pas prévu de détecter le PDCCH NR sur le premier symbole dans le domaine temporel, dans un cas où le nombre d'éléments de ressource, RE, est supérieur ou égal à un seuil du nombre de RE, ou lorsque le premier taux d'occupation des ressources est supérieur ou égal à un premier seuil de taux d'occupation, ou lorsque le nombre de RE est supérieur ou égal au seuil du nombre de RE et que le premier taux d'occupation de ressource est supérieur ou égal au premier seuil de taux d'occupation ;
éventuellement, au moins l'un parmi le seuil du nombre de RE et le seuil du premier taux d'occupation est lié à au moins l'un parmi un niveau d'agrégation du PDCCH NR et un format d'informations de commande de liaison descendante, DCI, dans le PDCCH NR.

5. Procédé selon l'une quelconque des revendication 1 à 4, dans lequel la détermination (S102), au moins sur la base des informations de configuration du CRS, s'il est prévu de détecter le PDCCH NR sur le premier symbole dans le domaine temporel, comprend l'un de :
la détermination s'il est prévu de détecter le PDCCH NR sur le premier symbole dans le domaine temporel, sur la base des informations de configuration du CRS et des informations de configuration du PDCCH NR ; ou
la détermination (S1001) d'un deuxième taux d'occupation de ressource du CRS dans un ensemble de ressources de commande, CORESET, du PDCCH NR, dans lequel un deuxième symbole dans le domaine temporel du CORESET chevauche le premier symbole dans le domaine temporel, et la détermination (S1002) qu'il n'est pas prévu de détecter le PDCCH NR sur le premier symbole dans le domaine temporel, dans un cas où le deuxième taux d'occupation de ressource est supérieur ou égal à un deuxième seuil de taux d'occupation ;
dans lequel, éventuellement, la détermination s'il est prévu de détecter le PDCCH NR sur le premier symbole dans le domaine temporel, sur la base des informations de configuration du CRS et des informations de configuration du PDCCH NR comprend le fait de :
déterminer (S901) un nombre d'un motif configuré du CRS et un niveau d'agrégation du PDCCH NR ; et
déterminer (S902) qu'il n'est pas prévu de détecter le PDCCH NR sur le premier symbole dans le domaine temporel, dans un cas où le nombre du motif configuré du CRS est supérieur ou égal à un seuil de nombre de motif, et le niveau d'agrégation est inférieur ou égal à un seuil de niveau.

6. Procédé selon l'une des revendications 1 à 5, comprenant en outre le fait de :
transmettre, à un dispositif réseau, des informations de capacité utilisées pour indiquer si le terminal prend en charge la réception du PDCCH NR sur le premier symbole dans le domaine temporel, dans un cas où les informations de configuration du CRS satisfait une configuration cible.

7. Procédé de transmission d'un canal de commande, mis en œuvre par un dispositif réseau, comprenant le fait de :
déterminer (S1101) un premier symbole dans le domaine temporel correspondant à un signal de référence spécifique à une cellule, CRS, configuré pour un terminal, dans lequel le premier symbole dans le domaine temporel constitue une partie ou la totalité des symboles dans le domaine temporel dans les ressources du domaine temporel où se trouve le CRS ; et
déterminer (S1102), au moins sur la base des informations de configuration du CRS, s'il faut prévoir que le terminal détecte un nouveau canal de commande physique radio en liaison descendante, NR PDCCH, sur le premier symbole dans le domaine temporel.

8. Procédé selon la revendication 7, dans lequel la détermination (S1102), au moins sur la base des informations de configuration du CRS, s'il faut prévoir que le terminal détecte le PDCCH NR sur le premier symbole dans le domaine temporel, comprend le fait de :
déterminer (S1201) un nombre d'un motif configuré du CRS ; et
déterminer (S1202) de ne pas prévoir que le terminal détecte le PDCCH NR sur le premier symbole dans le domaine temporel, dans un cas où le nombre du motif configuré du CRS est supérieur ou égal à un seuil de nombre de motif.

9. Procédé selon la revendication 7 ou 8, dans lequel la détermination (S1102), au moins sur la base des informations de configuration du CRS, s'il faut prévoir que le terminal détecte le PDCCH NR sur le premier symbole dans le domaine temporel, comprend le fait de :
déterminer (S1301) un nombre d'un motif configuré du CRS et un nombre de ports correspondant respectivement à chaque motif configuré du CRS ; et
déterminer (S1302) de ne pas prévoir que le terminal détecte le PDCCH NR sur le premier symbole dans le domaine temporel, dans un cas où le nombre du motif configuré du CRS est supérieur ou égal à un seuil de nombre de motif, et un nombre de ports correspondant à au moins un motif configuré du CRS est supérieur ou égal à un seuil de nombre de port.

10. Procédé selon l'une quelconque des revendication 7 à 9, dans lequel la détermination (S1102), au moins sur la base des informations de configuration du CRS, s'il faut prévoir que le terminal détecte le PDCCH NR sur le premier symbole dans le domaine temporel, comprend le fait de :
déterminer (S1401) au moins l'un parmi un certain nombre d'éléments de ressource, RE, occupés par le CRS sur le premier symbole dans le domaine temporel ou un premier taux d'occupation des ressources du CRS sur le premier symbole dans le domaine temporel, sur la base des informations de configuration du CRS ; et
déterminer (S1402) de ne pas prévoir que le terminal détecte le PDCCH NR sur le premier symbole dans le domaine temporel, dans un cas où le nombre d'éléments de ressource, RE, est supérieur ou égal à un seuil de nombre de RE, ou lorsque le premier taux d'occupation des ressources est supérieur ou égal à un premier seuil de taux d'occupation, ou lorsque le nombre de RE est supérieur ou égal au seuil du nombre de RE et que le premier taux d'occupation de ressource est supérieur ou égal au premier seuil de taux d'occupation ;
éventuellement, dans lequel au moins l'un parmi le seuil du nombre de RE et le seuil du premier taux d'occupation est lié à au moins l'un parmi un niveau d'agrégation du PDCCH NR et un format d'informations de commande de liaison descendante, DCI, dans le PDCCH NR.

11. Procédé selon l'une quelconque des revendication 7 à 10, dans lequel la détermination (S1102), au moins sur la base des informations de configuration du CRS, s'il faut prévoir que le terminal détecte le PDCCH NR sur le premier symbole dans le domaine temporel, comprend l'un de :
la détermination s'il faut prévoir que le terminal détecte le PDCCH NR sur le premier symbole dans le domaine temporel, sur la base des informations de configuration du CRS et des informations de configuration du PDCCH NR ; ou
la détermination (S1601) d'un deuxième taux d'occupation de ressource du CRS dans un ensemble de ressources de commande, CORESET, dans lequel un deuxième symbole dans le domaine temporel du CORESET chevauche le premier symbole dans le domaine temporel, et la détermination (S1602) qu'il ne faut pas prévoir que le terminal détecte le PDCCH NR sur le premier symbole dans le domaine temporel, dans un cas où le deuxième taux d'occupation de ressource est supérieur ou égal à un deuxième seuil de taux d'occupation ;
dans lequel, éventuellement, la détermination s'il faut prévoir que le terminal détecte le PDCCH NR sur le premier symbole dans le domaine temporel, sur la base des informations de configuration du CRS et des informations de configuration du PDCCH NR comprend le fait de :
déterminer (S1501) un nombre d'un motif configuré du CRS et un niveau d'agrégation du PDCCH NR ; et
déterminer (S1502) qu'il ne faut pas prévoir que le terminal détecte le PDCCH NR sur le premier symbole dans le domaine temporel, dans un cas où le nombre du motif configuré du CRS est supérieur ou égal à un seuil de nombre de motif, et le niveau d'agrégation est inférieur ou égal à un seuil de niveau.

12. Procédé selon l'une quelconque des revendications 7 à 11, comprenant en outre :
la réception des informations de capacité transmises par le terminal ; et
la détermination s'il faut prévoir que le terminal détecte le PDCCH NR sur le premier symbole dans le domaine temporel, dans le cas où il est établi, sur la base des informations de capacité, que les informations de configuration du CRS satisfait une configuration cible.

13. Terminal, comprenant :
un processeur ; et
une mémoire configurée pour stocker un programme informatique,
dans lequel le processeur est configuré pour exécuter le programme informatique pour mettre en œuvre le procédé de réception du canal de commande selon l'une quelconque des revendications 1 à 6.

14. Dispositif réseau, comprenant :
un processeur ; et
une mémoire configurée pour stocker un programme informatique,
dans lequel le processeur est configuré pour exécuter le programme informatique pour mettre en œuvre le procédé de transmission par canal de commande selon l'une quelconque des revendications 7 à 12.

15. Support de stockage non volatile lisible par ordinateur, configuré pour stocker un programme informatique, dans lequel, lorsque le programme informatique est exécuté par un processeur, les étapes du procédé de réception du canal de commande selon l'une quelconque des revendications 1 à 12 sont mises en œuvre.
